# EUROPÄISCHE PATENTSCHRIFT

(11) **EP 3 662 429 B1**
(45) Veröffentlichungstag und Bekanntmachung des Hinweises auf die Patenterteilung: **09.11.2022**
(21) Anmeldenummer: 18746680.0
(22) Anmeldetag: 26.07.2018
(51) Int. Cl.: H04L 9/32, B60L 53/30, G06Q 20/14, G06Q 50/06, G07F 15/00, H04L 9/00, G06Q 20/26

(54) **SYSTEM ZUM AUSTAUSCHEN VON ENERGIE**
SYSTEM FOR EXCHANGING ENERGY
PROCÉDÉ D'ÉCHANGE D'ÉNERGIE

(30) Priorität: 03.08.2017 DE 102017117598
(43) Veröffentlichungstag der Anmeldung: 10.06.2020
(73) Patentinhaber: INNOGY INNOVATION GMBH, 45139 Essen (DE)
(72) Erfinder: STÖCKER, Carsten, 40724 Hilden (DE)
(74) Vertreter: Cohausz & Florack
(86) Internationale Anmeldenummer: PCT/EP2018/070297
(87) Internationale Veröffentlichungsnummer: WO 2019/025279

(56) Entgegenhaltungen:
- WO-A1-2017/032541
- US-A1- 2013 154 562
- Blockchainfirst: "The first Multipurpose Blockchain enabled EV Charging Station", , 18. Januar 2017 (2017-01-18), Seiten 1-11, XP055514362, Gefunden im Internet: URL:https://medium.com/@blockchainfirst/th e-first-multipurpose-blockchain-enabled-ev -charging-station-d8265c1bcb38 [gefunden am 2018-10-11]

## Beschreibung

Die Anmeldung betrifft ein System zum Austauschen von Energie zwischen einer ersten Austauschvorrichtung und mindestens einer zweiten Austauschvorrichtung. Darüber hinaus betrifft die Anmeldung erste und zweite Austauschvorrichtungen, Verfahren zum Betreiben einer ersten und zweiten Austauschvorrichtung und eine Peer-to-Peer-Anwendung.

Aus dem Stand der Technik sind Ladestationen, aber auch andere (erste) Austauschvorrichtungen bekannt, die eingerichtet sind, elektrische Energie an ein Fahrzeug, aber auch an andere (zweite) Austauschvorrichtungen, abzugeben. Beispielsweise kann bei einer Ladestation das zu ladende Fahrzeug (bzw. dessen Energiespeicher) über ein Ladekabel mit der Ladestation elektrisch verbunden werden. Während eines Austauschvorgangs wird dann elektrische Energie ausgetauscht. Im vorliegenden Beispiel wird insbesondere elektrische Energie von der Ladestation in das Fahrzeug gespeist.

Um den (Energie-)Austauschvorgang abzurechnen, sind aus dem Stand der Technik verschiedene Lösungen bekannt. Beispielsweise kann vorgesehen sein, dass im Nachgang des Austauschvorgangs ein mit der Ladestation verbundener Server eine Abrechnung basierend auf der ausgetauschten Energiemenge und beispielsweise einer Vereinbarung zwischen dem Nutzer des Fahrzeugs und einem Anbieter der Ladestation durchführt. Alternativ kann der Abrechnungsvorgang im Vorfeld des Austauschvorgangs durchgeführt werden. Beispielsweise kann zunächst für eine bestimmte, zu ladende Energiemenge ein Geldbetrag von einem Konto eines Nutzers durch einen Server abgebucht werden. Anschließend wird dann die bestimmte Energiemenge geladen. WO 2017/032541 A1 offenbart ein Verfahren zum Austauschen einer Energiemenge.

Diese Lösungen des Standes der Technik haben jedoch verschiedene Nachteile. So ist zunächst stets eine zentrale Instanz in Form eines Servers (oder mehrerer Server) erforderlich. Neben den hohen Transaktionskosten, die durch eine entsprechende Architektur entstehen, ist ein weiterer Nachteil dieser Architektur, dass die zentrale Instanz bzw. der zentrale Server Nutzerdaten (Kontodaten, Zugangsdaten, Verbrauchsdaten, etc.) verwaltet. Ein ständiges Problem der zentralen Instanz ist, die auf einem oder mehreren Server/n gespeicherten Nutzerdaten vor einem Zugriff eines unberechtigten Dritten zu schützen. Insbesondere ist ein großer sicherheitstechnischer Aufwand erforderlich, um eine Manipulation beispielsweise der Nutzerdaten, Abrechnungsdaten, etc. zu verhindern. Dies führt wiederum zu höheren Transaktionskosten.

Ferner können bei dem Austausch elektrischer Energie oder bei der Durchführung der Abrechnung des Servers Fehler auftreten. Wenn beispielsweise die Abrechnung vorab erfolgt ist und anschließend ein technischer Fehler während des Austauschvorgangs auftritt, kann ggf. nicht die vereinbarte Leistung bzw. bestimmte Energiemenge übertragen werden. Andererseits kann es im Zuge eines dem Austauschvorgang nachgeordneten Abrechnungsvorgangs zu einem technischen Fehler kommen, so dass eine übertragene Energiemenge nicht korrekt durch einen Server abgerechnet werden kann. Insgesamt besteht bei den Stand der Technik Systemen daher das Risiko, dass eine Diskrepanz zwischen (tatsächlich) abgegebener Energiemenge und (tatsächlich) abgerechneter Energiemenge bestehen kann.

Daher liegt der Anmeldung die Aufgabe zugrunde, ein System zum Austauschen von elektrischer Energie zwischen zumindest zwei Austauschvorrichtungen bereitzustellen, welches in sicherer Weise einen ordnungsgemäßen Austauschvorgang ermöglicht und insbesondere eine Diskrepanz zwischen (tatsächlich) abgegebener Energiemenge und (tatsächlich) abgerechneter Energiemenge verhindert.

Die Aufgabe wird gemäß einem ersten Aspekt der vorliegenden Anmeldung durch ein System, insbesondere durch ein System zum Austauschen von elektrischer Energie zwischen zumindest zwei Austauschvorrichtungen, gelöst. Das System zum Austauschen von elektrischer Energie umfasst mindestens eine erste Austauschvorrichtung, zumindest eingerichtet zum Abgeben von elektrischer Energie in Form eines (elektrischen) Energiestroms an mindestens eine zweite, mit der ersten Austauschvorrichtung verbindbare, Austauschvorrichtung während eines Austauschvorgangs. Das System umfasst mindestens ein erstes, der ersten Austauschvorrichtung zugeordnetes, Peer-to-Peer-Modul, eingerichtet zum Kommunizieren mit mindestens einer Peer-to-Peer-Anwendung mindestens eines Peer-to-Peer-Netzwerks. Das erste Peer-to-Peer-Modul ist zumindest zum Empfangen eines Tokenstroms während des Austauschvorgangs eingerichtet, wobei die Aussendung des Tokenstroms von der zweiten Austauschvorrichtung bewirkbar ist. Das System umfasst mindestens ein Synchronisationsmodul, eingerichtet zum Synchronisieren des von der ersten Austauschvorrichtung an die zweite Austauschvorrichtung abgegebenen Energiestroms mit dem empfangenen Tokenstrom während des Austauschvorgangs.

Im Gegensatz zum Stand der Technik ist anmeldungsgemäß vorgesehen, dass während eines Austauschvorgangs ein Energiestrom und ein Tokenstrom zwischen zwei Austauschvorrichtung insbesondere unter Steuerung einer Peer-to-Peer-Anwendung ausgetauscht werden, wobei die beiden Ströme miteinander synchronisiert werden. Durch die zwei synchronisierten Ströme wird erreicht, dass das Risiko einer Diskrepanz zwischen (tatsächlich) abgegebener Energiemenge und (tatsächlich) abgerechneter Energiemenge signifikant reduziert wird.

Ferner ist im Gegensatz zum Stand der Technik anmeldungsgemäß ein Austauschvorgang in sicherer Weise durchführbar, indem anstelle eines zentralen Servers oder einer Plattform ein Peer-to-Peer-Netzwerk (also ein Framework), zumindest ein Teil (>1) der Peers des Peer-to-Peer-Netzwerks, zumindest die Überwachung, vorzugsweise die Steuerung des Austauschvorgangs, durchführt. Bei einem Peer-to-Peer-Netzwerk werden hohe Sicherheitsstandards dadurch erreicht, indem vorzugsweise sämtliche Rechner (Peer-Knoten bzw. Peers) des Netzwerks, zumindest eine Teilmenge der Peers des Netzwerks, die Korrektheit von Austauschvorgängen und/oder Synchronisationsprozessen überwacht/en. Die Transaktionskosten können signifikant reduziert werden. Es ist keine zentrale, übergeordnete Plattform, Server, Cloud, etc. erforderlich.

Das System umfasst mindestens eine erste Austauschvorrichtung. Die erste Austauschvorrichtung ist insbesondere zum Abgeben von elektrischer Energie eingerichtet. Beispielweise kann die erste Austauschvorrichtung mit einem Stromnetz (z.B. öffentliches Stromnetz, privates Mikronetz (microgrid)) verbunden sein, über mindestens einen elektrischen Erzeuger (z.B. Photovoltaikanlage, Windkraftanlage, etc.) verfügen und/oder einen elektrischen Energiespeicher (z.B. wiederaufladbare Batterie) aufweisen, um elektrische Energie bereitzustellen. In einer Ausführungsform kann die erste Austauschvorrichtung eine stationäre Austauschvorrichtung (z.B. Ladestation) sein.

Die erste Austauschvorrichtung kann über mindestens ein steuerbares erstes Energieaustauschmodul verfügen, welches mit einem zweiten Energieaustauschmodul einer zweiten Austauschvorrichtung elektrisch verbunden werden kann. Beispielsweise kann ein Ladekabel für die elektrische Verbindung verwendet werden. Auch kann eine drahtlose Übertragung der elektrischen Energie vorgesehen sein.

Die zweite Austauschvorrichtung kann zumindest eingerichtet sein, die elektrische Energie zu empfangen. Beispielsweise kann die zweite Austauschvorrichtung einen elektrischen Energiespeicher (z.B. wiederaufladbare Batterie) und/oder einen elektrischen Verbraucher aufweisen. Die zweite Austauschvorrichtung kann eine mobile Austauschvorrichtung (z.B. ein Elektrofahrzeug) sein. Die zweite Austauschvorrichtung kann vorzugsweise für einen bidirektionalen Energieaustausch eingerichtet sein.

Die elektrische Energie wird anmeldungsgemäß in Form eines Energiestroms übertragen. Unter einem Energiestrom ist vorliegend insbesondere zu verstehen, dass eine bestimmte Energiemenge pro bestimmte Zeiteinheit nahezu kontinuierlich übertragen werden kann. Hierbei ist die Energiemenge (und/oder die Zeiteinheit) insbesondere anpassbar. Beispielsweise kann das Energieaustauschmodul den Energiestrom steuern, also ändern bzw. anpassen.

Darüber hinaus ist mindestens ein erstes Peer-to-Peer-Modul vorgesehen. Das erste Peer-to-Peer-Modul ist zum Kommunizieren mit mindestens einer Peer-to-Peer Anwendung eingerichtet. Ein Peer-to-Peer-Netzwerk, insbesondere zumindest ein Teil der Peers des Peer-to-Peer-Netzwerks, weist/en die Peer-to-Peer-Anwendung auf. Hierdurch kann der Austauschvorgang von den Peers des Peer-to-Peer-Netzwerks überwacht werden.

Das erste Peer-to-Peer-Modul ist der ersten Austauschvorrichtung zugeordnet. Beispielsweise kann die erste Austauschvorrichtung ein Peer-to-Peer-Modul umfassen. Vorzugsweise ist jedes erste Peer-to-Peer-Modul eindeutig einer jeweiligen ersten Austauschvorrichtung zugeordnet. Beispielsweise kann das erste Peer-to-Peer-Modul in der ersten Austauschvorrichtung integriert sein.

Es ist auch möglich, dass eine Kommunikationsverbindung zwischen der ersten Austauschvorrichtung und einem (entfernt angeordneten) ersten Peer-to-Peer-Modul vorgesehen ist, welches der ersten Austauschvorrichtung zugeordnet ist. Dies bedeutet insbesondere, dass das erste Peer-to-Peer-Modul zumindest im Namen der ersten Austauschvorrichtung kommunizieren und/oder handeln kann. Beispielsweise kann das erste Peer-to-Peer-Modul teilweise durch eine separate Verarbeitungseinrichtung, wie beispielsweise ein mobiles Kommunikationsgerät (z. B. Mobiltelefon, mobiler Computer usw.), oder auf einer entfernten stationären Verarbeitungseinrichtung (z.B. ein Rechenzentrum) gebildet sein. Im Falle eines mobilen Kommunikationsgeräts oder einer entfernt angeordneten stationären Verarbeitungseinrichtung kann die mindestens eine erste Austauschvorrichtung einen sicheren Kommunikationskanal zur Verarbeitungseinrichtung (oder Mobilkommunikationseinrichtung) des Rechenzentrums aufweisen und die Verarbeitungseinrichtung selbst kann eine Verbindung zum Peer-to-Peer-Netzwerk bereitstellen. In einer Ausführungsform kann die entfernte Verarbeitungseinrichtung ein "Gateway" zum Peer-to-Peer-Netzwerk sein. Dies bedeutet, dass die erste Austauschvorrichtung über das zugeordnete erste Peer-to-Peer-Modul und das hierdurch gebildete Gateway sicher mit dem Peer-to-Peer-Netzwerk kommunizieren kann.

Im Vergleich zu einem Client-Server-Netzwerk, bei dem ein Server einen Dienst anbietet und ein Client diesen Dienst nutzt, ist in einem Peer-to-Peer-Netzwerk diese Rollenverteilung aufgehoben. Jeder Teilnehmer des Peer-to-Peer-Netzwerks kann einen Dienst gleichermaßen nutzen und selbst anbieten. Insbesondere ist ein Peer-to-Peer-Netzwerk selbstbestimmt und/oder selbstorganisiert (ohne übergeordnete Einheit). Vorliegend weist vorzugweise jeder Rechner bzw. Peer des Peer-to-Peer-Netzwerks eine Peer-to-Peer-Anwendung auf.

Das erste Peer-to-Peer-Modul ist eingerichtet, einen Tokenstrom zu empfangen. Unter einem Tokenstrom ist anmeldungsgemäß zu verstehen, dass eine bestimmte Tokenmenge (z.B. x Nanotoken) pro bestimmte Zeiteinheit nahezu kontinuierlich übertragen werden kann. Hierbei repräsentiert ein Token bzw. eine Tokenmenge einen bestimmten (Geld-)Wert. Aus technischer Sicht ist vorliegend ein Token bzw. eine digitale Einheit durch eine durch kryptographische Verfahren signierte Transaktion mit der ein digitale Recheneinheit (z.B. Cryptowährung wie Bitcoin, Ether oder Asset-backed Crypto-Euro; Ownership Token, der den Wert an einem Asset repräsentiert oder andere Token-Konstrukte) zwischen zwei Parteien bzw. deren Wallets bzw. deren Austauschvorrichtung übertragen wird. Diese Transaktion kann über ein zentrales eMoney / digital Money System oder über - die für diese Anmeldung bevorzugte Variante - ein dezentrales System (z.B. Distributed Ledger Technoloy, Blockchain) abgewickelt werden. In anderen Varianten kann eine solche Transaktion verschlüsselt sein (z.B. zCash, Monero).

Der Tokenstrom, insbesondere der Empfang des Tokenstroms, kann von der Peer-to-Peer-Anwendung überwacht und vorzugsweise gesteuert werden. Während des Austauschvorgangs kann der Energiestrom und der Tokenstrom im Wesentlichen parallel zueinander übertragen werden.

Darüber hinaus umfasst das anmeldungsgemäße System ein Synchronisationsmodul, eingerichtet zum Synchronisieren des Tokenstroms und des Energiestroms in (nahezu) Echtzeit. Das Synchronisationsmodul ist insbesondere eingerichtet, eine Synchronisierung, also einen im Wesentlichen zeitlichen Gleichlauf, zwischen dem abgegebenen Energiestrom und dem empfangenen Tokenstrom während des Austauschvorgangs zu bewirken. Hierfür kann das Synchronisationsmodul beispielsweise einen Steuerdatensatz an ein Energieaustauschmodul übertragen. Basierend auf dem Steuerdatensatz kann dann der Energiestrom für eine Synchronisierung mit dem Tokenstrom angepasst werden. Alternativ oder zusätzlich kann in entsprechender Weise der Tokenstrom für eine Synchronisierung angepasst werden.

Gemäß einer ersten Ausführungsform des anmeldungsgemäßen Systems kann das System mindestens ein zweites, der zweiten Austauschvorrichtung zugeordnetes, Peer-to-Peer-Modul umfassen. Das zweite Peer-to-Peer-Modul kann zum Kommunizieren mit der Peer-to-Peer-Anwendung des Peer-to-Peer-Netzwerks eingerichtet sein. Das zweite Peer-to-Peer Modul kann zumindest zum Aussenden des Tokenstroms an das erste Peer-to-Peer-Modul eingerichtet sein. Vorzugsweise kann mittels der Peer-to-Peer-Anwendung eine (verschlüsselte) Kommunikationsverbindung zwischen dem ersten und dem zweiten Peer-to-Peer-Modul hergestellt werden. Beispielsweise kann ein Tunnel zwischen ersten und zweiten Peer-to-Peer-Modul hergestellt werden. Ein Daten- oder Tokenstrom kann in sicherer Weise und unter der Kontrolle des Peer-to-Peer Netzwerks übertragen werden.

Entsprechend den obigen Ausführungen zu dem ersten Peer-to-Peer-Modul kann das zweite Peer-to-Peer-Modul in der zweiten Austauschvorrichtung oder in einem separaten Gerät, beispielsweise ein mobiles Endgerät des Nutzers der zweiten Austauschvorrichtung, integriert sein.

Vorzugsweise kann das System mindestens ein Energiemessmodul umfassen. Das Energiemessmodul kann zum Messen des Energiestroms eingerichtet sein. Das mindestens eine Energiemessmodul kann vorzugsweise in der ersten Austauschvorrichtung und/oder der zweiten Austauschvorrichtung angeordnet sein. Das Energiemessmodul kann zumindest zum nahezu kontinuierlichen Messen des elektrischen Energiestroms eingerichtet sein. Beispielsweise kann mindestens ein elektrischer Parameter, wie (augenblicklicher) Strom, (augenblickliche) Spannung, (augenblickliche) Wirk- oder Blindleistung, (augenblickliche) Phasenverschiebung, und/oder (augenblickliche) Frequenz während des Austauschvorgangs gemessen werden. Aus dem mindestens einen gemessenen elektrischen Parameter kann der elektrische Energiestrom, insbesondere ein augenblicklicher Energiestrom, bestimmt werden, Der bestimmte elektrische Energiestrom kann dem Synchronisationsmodul für einen Synchronisierungsprozess zur Verfügung gestellt werden.

Alternativ oder zusätzlich kann das System mindestens ein Tokenmessmodul umfassen. Das Tokenmessmodul kann zum Messen des Tokenstroms eingerichtet sein. Das mindestens eine Tokenmessmodul kann vorzugsweise in der ersten Austauschvorrichtung und/oder der zweiten Austauschvorrichtung angeordnet sein. Das Tokenmessmodul kann zumindest zum nahezu kontinuierlichen Messen des Tokenstroms eingerichtet sein. Insbesondere kann die augenblickliche Anzahl von empfangenen (oder ausgesendeten) Token pro Zeiteinheit erfasst werden. Ein Tokenmessmodul kann beispielsweise eine Tokenendetransaktion verfolgen und/oder den Empfang von Token abfragen (z.B. in einem Blockchain-Wallet, einem DAG tangle Wallet, einem Payment- oder State Channel, einer Interledger oder Polkadot Transaktion, oder einer blockchainifizierten Datenbanktransaktion bzw. einem Datenbankwallet) Der bestimmte (augenblickliche) Tokenstrom kann dem Synchronisationsmodul zur für einen Synchronisierungsprozess Verfügung gestellt werden.

Wie bereits beschrieben wurde, weist das System mindestens ein Synchronisationsmodul auf, welches beispielsweise aufgrund des erfassten (augenblicklichen) Tokenstroms und/oder des erfassten (augenblicklichen) Energiestroms eine Synchronisierung der beiden Ströme bewirken kann. Gemäß einer weiteren Ausführungsform kann das Synchronisationsmodul zum Synchronisieren des Energiestroms mit dem Tokenstrom derart eingerichtet sein, dass bei Detektion einer Änderung des Tokenstroms eine (entsprechende) Änderung des Energiestroms bewirkt wird. Beispielsweise kann ein entsprechender Steuerdatensatz an das steuerbare erste Energieaustauschmodul übertragen werden. Daraufhin kann das Energieaustauschmodul den abgegebenen elektrischen Energiestrom entsprechend ändern. Wenn beispielsweise erfasst wurde, dass sich der Tokenstrom um einen Wert X % geändert hat, kann der Energiestrom um einen entsprechenden Wert X % (innerhalb der zulässigen physikalischen Grenzen) geändert werden. Dies kann nahezu in Echtzeit (< 10 s, insbesondere < 1 s) durchgeführt werden.

Alternativ oder zusätzlich kann das Synchronisationsmodul zum Synchronisieren des Energiestroms mit dem Tokenstrom derart eingerichtet sein, dass bei Detektion einer Änderung des Energiestroms eine Änderung des Tokenstroms bewirkt wird. Beispielsweise kann ein entsprechender Steuerdatensatz an das erste oder zweite Peer-to-Peer-Modul übertragen werden. Daraufhin kann das Peer-to-Peer-Modul den abgegebenen Tokenstrom entsprechend ändern. Wenn beispielsweise erfasst wurde, dass sich der Energiestrom um einen Wert X % geändert hat, kann der Tokenstrom um einen entsprechenden Wert X % geändert werden. Dies kann nahezu in Echtzeit (< 10 s, insbesondere < 1 s) durchgeführt werden.

Gemäß einer bevorzugten Ausführungsform kann das Synchronisationsmodul in der ersten Austauschvorrichtung, wie einer Ladestation, integriert sein. Beispielsweise kann das Synchronisationsmodul zumindest teilweise von einem Austauschcontroller, wie einem Ladecontroller, der ersten Austauschvorrichtung gebildet sein. Wenn ein in der ersten Austauschvorrichtung integriertes Tokenmessmodul beispielsweise eine Änderung des Tokenstroms detektiert, kann dies dem Ladecontroller zur Verfügung gestellt werden. Eine Anpassung des Energiestroms entsprechend den obigen Ausführungen kann dann erfolgen.

Alternativ oder zusätzlich kann die Peer-to-Peer-Anwendung das Synchronisationsmodul umfassen. Insbesondere kann das Synchronisationsmodul ein von zumindest einem Teil der Peers des Peer-to-Peer-Netzwerks ausführbares Softwaremodul (z.B. ein Smart Contract und/oder ein kryptographisches Modul, welches einen außerhalb des Peer-to-Peer-Netzwerks installierten Synchronisations-Code mit dem Peer-to-Peer-Netzwerk verbindet) sein. Während eines Austauschvorgangs kann über mindestens ein Peer-to-Peer-Modul ein erfasster Tokenstrom und/oder ein erfasster Energiestrom in Form von entsprechenden Messdatensätzen zumindest nahezu kontinuierlich an das Synchronisationsmodul übertragen werden. Das Synchronisationsmodul ist insbesondere eingerichtet, basierend auf den Messdatensätzen eine Änderung entsprechend den obigen Ausführungen zu detektieren und mindestens einen entsprechenden Steuerdatensatz zu generieren. Der Steuerdatensatz kann dann an das entsprechende Peer-to-Peer-Modul übertragen. Das Peer-to-Peer-Modul kann dann den Tokenstrom anpassen und/oder das Peer-to-Peer-Modul kann den Steuerdatensatz beispielsweise an das Energieaustauschmodul (oder einen Ladecontroller oder dergleichen) weiterleiten, um insbesondere eine Anpassung des Energiestroms zu bewirken.

Darüber hinaus kann gemäß einer Ausführungsform ein Tokenwechselmodul vorgesehen sein. Vorzugsweise kann das Tokenwechselmodul in dem Synchronisationsmodul integriert sein. Das Tokenwechselmodul ist insbesodnere eingerichtet, einen ersten Tokenstrom bzw. eine erste Tokenart in einen zweiten Tokenstrom bzw. eine zweite Tokenart umzuwandeln. Beispielsweise für den Fall, dass zwei Austauschvorrichtungen (bzw. der jeweilige Nutzer) unterschiedliche Tokensysteme/-arten verwenden, kann das Tokenwechselmodul Verwendung finden (z.B. shapeshift). Beispielsweise kann eine erste Austauschvorrichtung Token A akzeptieren und eine zweite Austauschvorrichtung nur Token B zur Verfügung haben. In diesem Fall kann das Tokenwechselmodul vor, nach oder während des Tokenaustausches eine Umwandlung der Token B in Token A durchführen. Das Tokenwechselmodul kann beispielsweise ein Wallet in beiden Währungen haben und selber den Austausch als ein Dienst durchführen oder die Token an dritten Marktplätzen wechseln.

Ferner kann gemäß einer weiteren Ausführungsform das Synchronisationsmodul mit mindestens einer Steuervorrichtung (bzw. Steuerungssystem) verbunden sein, um insbesondere eine Synchronisierung von Energiestrom und/oder Tokenstrom mit der Steuervorrichtung bereitzustellen. Die Steuervorrichtung kann beispielsweise in einer zweiten Austauschvorrichtung, insbesondere einen Verbraucher (z.B. Ladestrommanagement und -optimierungsmodul in einem Fahrzeug) intergiert sein. Alternativ oder zusätzlich kann die Steuervorrichtung in einer ersten Austauschvorrichtung (von einem Anbieter) beispielsweise als Ladestromsteuerung- und Optimierung eines Energieanbieters integriert sein. Auch kann die Steuervorrichtung ein SCADA System oder Vehicle-to-Grid (V2G) System eines Netzbetreibers für eine Steuerung- und Stabilisierung des Netzbetriebes sein.

Über die Verbindung eines Synchronisationsmoduls mit einer Steuervorrichtung können beispielsweise Meta-Daten zur Systemsteuerung und/oder Steuerungsdatensätze ausgetauscht werden. Meta-Daten zur Systemsteuerung umfassen insbesondere Festlegungen, welches der Systeme die primäre Steuerung des Ladestroms übernimmt, wie bei Abweichungen umzugehen ist und/oder welche Randbedingungen für die Festlegung von Steuerungsdatenätzen existieren.

Gemäß einer bevorzugten Ausführungsform kann das mindestens eine Synchronisationsmodul zum Synchronisieren des Energiestroms mit dem Tokenstrom abhängig von mindestens einem vorgegebenen Synchronisationskriterium eingerichtet sein. Das Synchronisationskriterium kann insbesondere das zumindest im Wesentlichen einzuhaltende Gleichlaufverhältnis zwischen Energiestrom und Tokenstrom, also zwischen Energiemenge pro bestimmter Zeiteinheit und Tokenmenge pro bestimmter Zeiteinheit, angeben. Wenn beispielsweise eine Änderung eines der beiden Ströme detektiert wird, kann das Synchronisationsmodul eine Synchronisierung entsprechend dem Gleichlaufverhältnis durchführen. Insbesondere während einer Startphase des Austauschvorgangs kann ein Gleichlauf entsprechend dem vorgegebenen Synchronisationskriterium durch das Synchronisationsmodul eingestellt und in weiteren Verlauf eingehalten werden. Eine hohe Synchronizität zwischen dem Energiestrom und dem Tokenstrom kann während des gesamten Austauschvorgangs erreicht werden.

Gemäß einer besonders bevorzugten Ausführungsform kann mindestens ein Peer-to-Peer-Modul zum Bewirken einer Generierung eines Austauschvorgangsvereinbarungsmoduls durch die Peer-to-Peer-Anwendung eingerichtet sein. Das Austauschvorgangsvereinbarungsmodul kann von der Peer-to-Peer-Anwendung derart gespeichert werden, dass das Austauschvorgangsvereinbarungsmodul von mindestens einem Teil (insbesondere sämtlichen) der Peers des Peer-to-Peer-Netzwerkes lesbar ist.

Ein Austauschvorgangsvereinbarungsmodul kann insbesondere ein Smart Contract sein. Insbesondere kann ein Überwachungsmodul und/oder ein Synchronisationsmodul zumindest ein Teil des Austauschvorgangsvereinbarungsmoduls sein.

Alternativ oder zusätzlich kann vorgesehen sein, dass eine Austauschvereinbarung als direkte Kommunikationsnachricht (z.B. über Peer-to-Peer-Kommunikationsprotokolle) zwischen zwei Peer-to-Peer-Modulen ausgetauscht werden kann. Ein derartiges Peer-to-Peer-Modul kann ein Austauschvorgangsvereinbarungsmodul umfassen, welches jeweils insbesondere eine Identität bzw. Kennung in dem Peer-to-Peer-Netzwerk haben kann. Diese Identität erlaubt über die Anwendung kryptographischer Verfahren die Authentifizierung der Austauschvorgangsvereinbarungsmodule sowie die Herstellung von Datenintegrität über die Anwendung von Hashfunktionen und die Speicherung von Hash-Werten in dem Peer-to-Peer-Netzwerk.

Das Austauschvorgangsvereinbarungsmodul kann zum Überwachen und insbesondere Steuern des Austauschvorgangs zwischen einer ersten Austauschvorrichtung (z.B. Ladestation) und einer zweiten Austauschvorrichtung (z.B. Elektrofahrzeug) genutzt werden. Insbesondere kann überwacht werden, ob der Austauschvorgang entsprechend vereinbarten und in dem Austauschvorgangsvereinbarungsmodul vor dem zugehörigen Austauschvorgang gespeicherten Datenelementen durchgeführt wird. Wird von den Peers eine Abweichung detektiert, kann dies unmittelbar gemeldet und der Austauschvorgang unterbrochen oder abgebrochen werden.

Die Generierung des Austauschvorgangsvereinbarungsmoduls kann durch mindestens ein Peer-to-Peer-Modul, wie beispielsweise ein erstes oder zweites Peer-to-Peer-Modul, bewirkt werden, beispielsweise durch Übertragen einer Anforderungsnachricht, die mindestens einen Befehl zur Erstellung des Austauschvorgangsvereinbarungsmoduls umfasst. Die Anforderungsnachricht kann von einem Peer-to-Peer-Modul gesendet werden, um einen Energieaustausch zwischen der zugeordneten Austauschvorrichtung und einer weiteren Austauschvorrichtung zu ermöglichen.

Insbesondere kann ein geeigneter Code und ggf. mindestens ein Schlüssel (z.B. Signatur) zum Verifizieren des Absenders einer Nachricht (z.B. das sendende Peer-to-Peer-Modul und/oder die zugeordnete Austauschvorrichtung) und/oder der Echtheit einer Nachricht an die Peer-to-Peer-Anwendung übertragen oder in die Peer-to-Peer-Anwendung durch das Peer-to-Peer-Modul geschrieben werden. Das Austauschvorgangsvereinbarungsmodul kann zwischen zwei oder mehr Austauschvorrichtungen oder ähnlichen Entitäten generiert werden.

Vorzugsweise kann nach einer Bestätigungsnachricht von der (anderen) Austauschvorrichtung, die einen geeigneten Befehl und ggf. mindestens einen Schlüssel (z.B. Signatur) zum Verifizieren des Absenders der Bestätigungsnachricht umfassen kann, ein entsprechendes Austauschvorgangsvereinbarungsmodul, vorzugsweise nach einer Prüfung durch einen Teil der Peers, generiert werden. In einfacher Weise ausgedrückt, kann jede Austauschvorrichtung mit Hilfe eines Peer-to-Peer-Netzwerks oder der Peer-to-Peer-Anwendung nach einem oder mehreren geeigneten Partnern suchen und ein Austauschvorgangsvereinbarungsmodul mittels der Peer-to-Peer-Anwendung generieren.

Gemäß einer bevorzugten Ausführungsform kann das Austauschvorgangsvereinbarungsmodul mindestens ein Datenelement aus den folgenden Datenelementen umfassen:
- mindestens eine Kennung mindestens einer an dem Austauschvorgang beteiligten Austauschvorrichtung,
- mindestens ein Synchronisationskriterium,
- mindestens ein Austauschvorgangsstartkriterium,
- mindestens ein Austauschkriterium, und
- Kennung des mindestens einen Austauschvorgangs.

Vorzugsweise können in dem Austauschvorgangsvereinbarungsmodul die an dem mindestens einen Austauschvorgang beteiligten Austauschvorrichtungen identifiziert sein. Beispielsweise kann jede Austauschvorrichtungen in der Peer-to-Peer-Anmeldung mit einer (eindeutig) der Austauschvorrichtung (bzw. dem zugeordneten Peer-to-Peer-Modul) zugeordneten Kennung registriert sein. Sämtliche Kennung von registrierten Austauschvorrichtungen (und anderen Entitäten) können in einem Peer-to-Peer-Register, welches von der Peer-to-Peer-Anwendung kontrolliert wird, gespeichert sein. Die jeweilige Kennung kann in dem Austauschvorgangsvereinbarungsmodul gespeichert sein, so dass eine Überprüfung des Austauschvorgangs anhand der Kennungen möglich ist.

Ferner kann das Austauschvorgangsvereinbarungsmodul vorzugsweise mindestens ein (zuvor beschriebenes) Synchronisationskriterium aufweisen. Für einen Austauschvorgang kann das Synchronisationsmodul zumindest auf das Synchronisationskriterium zugreifen und insbesondere die Synchronisierung in oben beschriebener Weise steuern.

Alternativ oder zusätzlich kann mindestens ein Austauschvorgangsstartkriterium vorgesehen sein. Unter einem Austauschvorgangsstartkriterium ist ein Kriterium zu verstehen, durch welches ein Austauschvorgang gestartet werden kann. Beispielsweise kann als Austauschvorgangsstartkriterium vorgesehen sein, dass zunächst der elektrische Energiestrom gestartet wird und (z.B. innerhalb einer vorgebbaren Zeitspanne (z.B. > 10s)) der Tokenstrom anschließend gestartet und mit dem elektrischen Energiestrom synchronisiert wird (z.B. abhängig von dem Synchronisationskriterium). Alternativ kann als Austauschvorgangsstartkriterium vorgesehen sein, dass zunächst der Tokenstrom gestartet wird und (z.B. innerhalb einer vorgebbaren Zeitspanne (z.B. > 10s)) der elektrische Energiestrom anschließend gestartet und mit dem Tokenstrom synchronisiert wird. In einfacher und gleichzeitig sicherer Weise kann ein Austauschvorgang initiiert werden. Vorteilhafterweise kann jedes generiertes Austauschvorgangsvereinbarungsmodul mit einer eindeutigen Kennung versehen werden.

Das Austauschvorgangsvereinbarungsmodul kann mindestens ein Austauschkriterium umfassen. Beispielhafte und nicht abschließende Austauschkriterien sind die abzugebende (Gesamt-)Energiemenge, Zeitdauer des Austauschvorgangs (z.B. gewünschte Start- und Endzeit), elektrische Übertragungsparameter (z.B. max. zulässiger Strom, etc.), (finanzieller) Betrag X für eine bestimmte Energiemenge, die von einer Austauschvorrichtung zu entrichten ist (durch Streamen des Tokenstroms), etc.

Weitere optionale Datenelemente umfassen mindestens eine Wallet-Adresse mindestens einer beteiligten Austauschvorrichtung in dem Peer-to-Peer-Netzwerk und/oder einem Tokenstrom-Netzwerk, eine Kennung einer oben beschriebenen Steuervorrichtung, Steuerungskriterien, etc.

Darüber hinaus kann die Peer-to-Peer-Anwendung gemäß einer weiteren Ausführungsform zum Speichern von mindestens einem Austauschvorgangsdatensatz über den mindestens einen Austauschvorgang eingerichtet sein, derart, dass der Austauschvorgangsdatensatz von mindestens einem Teil der Peers des Peer-to-Peer-Netzwerkes lesbar ist. Beispielsweise kann nach einem Austauschvorgang ein entsprechender Austauschvorgangsdatensatz generiert werden. Alternativ oder zusätzlich kann vorgesehen sein, dass während des Austauschvorgangs ein Austauschvorgangsdatensatz generiert und laufend aktualisiert wird. Dies ermöglicht es, dass mindestens ein Teil der Peers den Austauschvorgang insbesondere durch Vergleichen des zuvor generierten (und auslesbaren) Austauschvorgangsvereinbarungsmoduls mit dem laufend aktualisierten Austauschvorgangsdatensatz überwachen kann. Bei Detektion einer Abweichung kann der Austauschvorgang abgebrochen oder unterbrochen werden.

Vorzugsweise kann der Austauschvorgangsdatensatz mindestens ein Datenelement aus den folgenden Datenelementen umfassen:
- mindestens eine Kennung mindestens einer an dem Austauschvorgang beteiligten Austauschvorrichtung,
- Kennung des mindestens einen Austauschvorgangs
- (bisher) ausgetauschte Energiemenge,
- (bisher) ausgetauschte Tokenmenge.

Für den Fall, dass der Austauschdatensatz nach dem Abschluss des Austauschvorgangs generiert und abgespeichert wird, kann beispielsweise die ausgetauschte bzw. übertragene Gesamt-Energiemenge und/oder die ausgetauschte bzw. übertragene Gesamt-Tokenmenge in dem Austauschvorgangsdatensatz gespeichert sein. Beispielsweise können entsprechende Datenelemente (die zuvor von entsprechende Messmodulen erfasst worden sind) von mindestens einem Peer-to-Peer-Modul an die Peer-to-Peer-Anwendung übertragen werden. Für den Fall, dass der Austauschdatensatz bereits während der Durchführung des Austauschvorgangs generiert wird, kann die ausgetauschte Energiemenge und/oder die ausgetauschte Tokenmenge (nahezu kontinuierlich) aktualisiert werden. Dies ermöglicht es, schon während eines Austauschvorgangs die bereits ausgetauschte Tokenmenge und/oder Energiemenge durch zumindest einen Teil der Peers zu überprüfen.

Ein Austauschdatensatz und/oder ein Austauschvorgangsvereinbarungsmodul kann/können von der Peer-to-Peer-Anwendung in der Peer-to-Peer-Anwendung und/oder einer von der Peer-to-Peer-Anwendung kontrollierten Speicheranordnung gespeichert werden.

Wie bereits beschrieben wurde, kann die Peer-to-Peer-Anwendung gemäß einer weiteren Ausführungsform mindestens ein Überwachungsmodul umfassen. Das Überwachungsmodul kann zumindest zum Überwachen des Synchronisationsmoduls und/oder des Austauschvorgangs eingerichtet sein. Mindestens ein Teil der Peers des Peer-to-Peer-Netzwerkes kann zum Ausführen des Überwachungsmoduls eingerichtet sein. Beispielsweise kann das Überwachungsmodul (augenblickliche) erfasste Energie- und/oder (augenblickliche) erfasste Tokenmengen (z.B. aus dem oben beschriebenen Datensatz) und ein zugehöriges Austauschvorgangsvereinbarungsmodul auswerten. Beispielsweise können vorab gespeicherte Austauschkriterien mit den (augenblicklich) erfassten Energie- und/oder Tokenmengen verglichen werden. Elektrische Energie kann sicher - auch ohne eine zentrale Instanz - ausgetauscht werden.

Gemäß einer Ausführungsform des Systems gemäß der vorliegenden Anmeldung kann die Peer-to-Peer-Anwendung ein dezentrales Register, eine verteilte Ledger oder eine geteilte Datenbank sein. Das dezentrale Register kann zumindest von jedem Teilnehmer des Peer-to-Peer-Netzwerks lesbar sein. Insbesondere können sämtliche Peer-to-Peer-Module und sämtliche Peers des Peer-to-Peer-Netzwerks vorzugsweise sämtliche Informationen in der als Register gebildeten Peer-to-Peer-Anwendung (oder der von der Peer-to-Peer-Anwendung kontrollierten Speicheranordnung) lesen. Bevorzugt können auch sämtliche Peer-to-Peer-Module und sämtliche weitere Rechner bzw. Peers des Peer-to-Peer-Netzwerks Nachrichten an die Peer-to-Peer-Anwendung senden oder in diese schreiben. In einfacher Weise können Informationen bevorzugt sämtlichen Teilnehmern des Peer-to-Peer-Netzwerks zugänglich gemacht werden. Dies erlaubt die Durchführung einer Überprüfung der in dem dezentralen Register gespeicherten Informationen, wie Austauschvorgangsdatensätze oder Austauschvorgangsvereinbarungsmodule. Insbesondere kann vorzugsweise jeder Rechner des Peer-to-Peer-Netzwerks eingerichtet sein, eine Überprüfung einer neuen Information insbesondere basierend auf älteren in der Peer-to-Peer-Anwendung abgespeicherten Informationen durchzuführen.

Darüber hinaus kann gemäß einer weiteren Ausführungsform des anmeldungsgemäßen Systems jeder Rechner bzw. Peer des Peer-to-Peer-Netzwerks die Peer-to-Peer-Anwendung aufweisen. Vorzugsweise kann jeder Rechner, zumindest ein Teil der Peers, jeweils den kompletten Dateninhalt, zumindest jedoch einem Teil des Dateninhalts der Peer-to-Peer-Anwendung, insbesondere des dezentralen Registers, umfassen. Beispielsweise kann vorgesehen sein, dass nach einer positiven Verifizierung einer neuen in die Peer-to-Peer-Anwendung geschriebenen Information diese von sämtlichen Rechnern, zumindest von einem Teil der Rechner, abgespeichert wird. Die Manipulationssicherheit kann hierdurch weiter verbessert werden.

Um neue Informationen manipulationssicher zu speichern, kann die Peer-to-Peer-Anwendung Verschlüsslungsmittel und/oder Signaturmittel und/oder Verifikationsmittel, beispielsweise geeignete Hash-Funktionen, umfassen. Mindestens ein Mittel der vorgenannten Mittel kann zum Speichern von insbesondere zumindest jedem generierten Austauschdatensatz und/oder ein Austauschvorgangsvereinbarungsmodul eingerichtet sein. Insbesondere kann vorgesehen sein, dass durch die Hash-Funktion eine Verknüpfung mit mindestens einer vorherigen im dezentralen Register gespeicherten Information hergestellt wird.

Es können weitere Daten, wie Anfragen, Stamm-, Kontext- und/oder Transaktionsdaten einer Austauschvorrichtung oder eines Nutzers gespeichert werden.

Bei einer besonders bevorzugten Ausführungsform kann die Peer-to-Peer-Anwendung eine Blockchain oder eine dezentrale Ledger sein, umfassend mindestens zwei miteinander verknüpfte Blöcke. Die Blockchain-Technologie bzw. "decentral ledger technology" wird bereits bei der Bezahlung mittels einer Cryptowährung, wie Bitcoin, eingesetzt. Es ist erkannt worden, dass durch eine spezielle Konfiguration eine Blockchain eingerichtet werden kann, zumindest einen Austauschvorgang mit einer Synchronisation eines Energiestroms und eines Tokenstroms zwischen zwei Austauschvorrichtungen manipulationssicher zu steuern. Die Blockchain gemäß der vorliegenden Ausführungsform ist insbesondere ein dezentralisiertes, Peer-to-Peerbasiertes Register, in dem vorzugsweise eine Mehrzahl von Austauschdatensätzen und/oder Austauschvorgangsvereinbarungsmodulen und sonstigen Nachrichten von Austauschvorrichtung/en protokolliert werden können. Eine Blockchain ist als technisches Mittel besonders geeignet, eine zentrale Instanz in einfacher und gleichzeitig sicherer Weise zu ersetzen.

Wie bereits beschrieben wurde, kann die mindestens eine Peer-to-Peer-Anwendung ein dezentralisiertes Register, ein verteiltes Ledger oder eine gemeinsam genutzte Datenbank sein, die konfiguriert ist, um Daten zu speichern, z.B. Austauschdatensätze, Kennung(en), usw. mit bestimmten Beweisen (proofs) und/oder Signaturen. Zusätzlich zu z.B. Kennung(en) von registrierten Austauschvorrichtungen, kann das dezentrale Register Computercode speichern, wie z.B. ein Überwachungsmodul zum Überwachen und/oder Steuern eines Austauschvorgangs oder ein Synchronisationsmodul zum Synchronisieren zweier Ströme. Insbesondere kann der Code durch eine Transaktion an die Adresse des Codes in dem so genannten "smart contracts" aufgerufen werden. Dieser Code kann auf der Mehrzahl von Peers des Peer-to-Peer-Netzwerks verarbeitet werden.

Es versteht sich, dass ein/e (smart contract-) Code- oder Verarbeitungslogik in sogenannten "Krypto-Bedingungen" ("crypto condictions") des Interledger-Protokolls (ILP) gespeichert und ausgeführt werden kann. Dies bedeutet, dass nicht unbedingt sämtlicher Code in einem smart contract, wie Ethereum smart contract, gespeichert sein muss.

In einer weiteren Ausführungsform kann der (smart contract-) Code auf einem dezentralen Berechnungsmarktplatz (z. B. Ethereum Computation Market, Trubit, Golem, Cryplets Microsoft) gespeichert und ausgeführt werden.

In einer weiteren Ausführungsform können Computercodes einer externen Rechenvorrichtung, die durch die Peer-to-Peer-Anwendung gesteuert werden, Algorithmen für dezentrale kognitive Analysen, künstliche Intelligenz oder maschinelles Lernen umfassen. Analytik und Lernen können mit anderen Geräten geteilt und über die Peer-to-Peer-Anwendung gemeinsam genutzt, aggregiert und weiter analysiert werden. Zum Beispiel können diese Algorithmen angewendet werden, um einen Austauschvorgang zu optimieren.

Ein dezentrales Register kann zumindest von einem Teil der Teilnehmer des Peer-to-Peer-Netzwerks lesbar sein. Insbesondere kann jeder Rechnerknoten (Peer) und jede registrierte Entität/Vorrichtung (mittels des jeweiligen Peer-to-Peer-Moduls) die Peer-to-Peer-Anwendung umfassen. Das dezentrale Register, zumindest der öffentliche Teil (d.h. ohne private contracts), kann zumindest von jedem Teilnehmer des Peer-to-Peer-Netzwerks gelesen werden. Insbesondere können alle Peer-to-Peer-Module und alle anderen Computer des Peer-to-Peer-Netzwerks vorzugsweise sämtliche Informationen in der Peer-to-Peer-Anwendung lesen, die als Register ausgebildet ist. Vorzugsweise ist es auch möglich, dass alle Peer-to-Peer-Module und alle anderen Computer des Peer-to-Peer-Netzwerks Nachrichten an die Peer-to-Peer-Anwendung senden oder Nachrichten senden können. Eine Nachricht oder Transaktion, die an einen smart contract gesendet wird, kann die Ausführung eines Codes des smart contracts (z. B. Überwachungsmodul, Synchronisationsmodul, usw.) starten, während Daten verwendet werden, die in dem smart contract gespeichert sind. Zum Beispiel kann das Empfangen von Messdaten, die zu einem Austauschvorgang gehören, die Ausführung des Überwachungsmoduls starten, wie oben beschrieben.

Die Peer-to-Peer-Anwendung kann auf folgenden Elementen aufgebaut werden: Peer-to-Peer-Netzwerk mit Consensus System/Protocol, Data Structure, Merkle Trees, Public Key Signatures und/oder Byzantinische Fehlertoleranz. Es kann Daten nach einem Consensus Prinzip replizieren. Es kann auditierbar und nachvollziehbar sein.

Auf einfache Weise können Informationen vorzugsweise allen Teilnehmer zur Verfügung gestellt werden. Dies kann eine Überprüfung der im dezentralen Register gespeicherten Informationen oder der im dezentralen Register ausgeführten Codes ermöglichen. Besonders bevorzugt kann jeder Rechner (Peers) im Peer-to-Peer-Netzwerk konfiguriert sein, um neue Informationen zu überprüfen, insbesondere auf der Grundlage älterer Informationen, die in der Peer-to-Peer-Anwendung gespeichert sind. Zusätzlich kann das mindestens eine Überwachungsmodul und/oder das mindestens eine Synchronisationsmodul durch mindestens einen Teil der Peers des Peer-to-Peer-Netzwerks, vorzugsweise durch alle Peers, überwacht werden. Eine Manipulation eines derartigen Moduls kann somit zumindest verhindert werden.

Darüber hinaus kann zumindest ein Peer, vorzugsweise jeder Peer, jeweils den kompletten Dateninhalt umfassen, aber zumindest einen Teil des Dateninhalts der Peer-to-Peer-Anwendung, insbesondere des dezentralen Registers, umfassen. Beispielsweise kann vorgesehen sein, dass nach einer positiven Überprüfung einer in die Anwendung geschriebenen Information oder z.B. nach einer positiven Registrierung einer Austauschvorrichtung in der Peer-to-Peer-Anwendung diese Information von allen Peers, zumindest von einem Teil der Peers, gespeichert wird. Beispielsweise können nach der Erzeugung eines Austauschvorgangsvereinbarungsmoduls und/oder nach einer erfolgreichen Registrierung einer Austauschvorrichtung das Austauschvorgangsvereinbarungsmodul bzw. die (neue) Kennung zumindest durch einen Teil der Peers, vorzugsweise durch sämtliche Peers des Peer-to-Peer-Netzwerks, gespeichert werden. Die Manipulationssicherheit für die in der Peer-to-Peer-Anwendung gespeicherten Daten kann dadurch weiter verbessert werden. Ein Austauschvorgang und/oder ein Synchronisationsprozess kann sicher gesteuert werden.

Um eine neue Information (z.B. aus einem IoT Gerät, wie einem Messgerät) in einer manipulationssicheren Weise zu speichern, kann die Peer-to-Peer-Anwendung Verschlüsselungsmittel und/oder Signaturmittel und/oder Verifikationsmittel umfassen, wobei mindestens eines der Verschlüsselungsmittel und/oder der Signaturmittel und/oder Verifizierungsmittel konfiguriert ist, um Daten, wie beispielsweise ein Austauschvorgangsvereinbarungsmodul, usw., zu speichern. Insbesondere kann vorgesehen sein, dass durch eine Hash-Funktion eine Verbindung mit mindestens einer zuvor gespeicherten Information im dezentralen Register hergestellt wird. Weitere Daten, wie z. B. Anforderungsnachrichten, gewöhnliche, kontextuelle und/oder Transaktionsdaten einer Entität können gespeichert werden.

Die Peer-to-Peer-Anwendung kann durch eine Directed Acyclic Graph (DAG) gebildet sein. Ein gerichteter azyklischer Graph, wie IOTA oder Tangle, bedeutet, dass Blöcke (oder Knoten des Graphen) über gerichtete Kanten miteinander gekoppelt sind. Dabei bedeutet "direct", dass die (alle) Kanten (immer) eine gleiche Richtung in der Zeit haben. Mit anderen Worten, es ist nicht möglich, zurückzugehen. Schließlich bedeutet azyklisch, dass Schleifen nicht existieren.

In weiteren Ausführungsformen der Peer-to-Peer-Anwendung kann die Blockchain eine "permissionless" oder "permissioned" Blockchain sein. In einem Fall kann die Blockchain eine öffentliche, Konsortium oder private Blockchain sein.

In einer weiteren Ausführungsform kann die Peer-to-Peer-Anwendung durch mehrere Peer-to-Peer-Netzwerke, insbesondere Blockchains, gebildet sein, die über Mechanismen wie "side chains" oder smart contracts verbunden sind. Ein Peer-to-Peer-Knoten bzw. Peer kann einen oder mehrere Blockchain-Client (s) ausführen.

Die Daten der Peer-to-Peer-Anwendung können auf der "dezentralen Ledger-Technologie" und/oder der "dezentralen Ledger-Steers (verschlüsselte) Datenspeicherung" über das Internet und vorzugsweise im dezentralen Datenspeicher, Objektspeicher bzw. Datenbank gespeichert sein, wie z. B. ein Interplanetary File System (IPFS) oder storj oder in einer verteilten Blockchain-Datenbank (z.B. BigChainDB oder mit Cryptowerk-Funktionen gehashte Datenbank). Der Zugriff auf verschlüsselte Daten an Drittanbieter kann über ein Berechtigungsmodul verwaltet werden, das als ein oder mehrere smart contract(s) in der Blockchain gebildet sein kann/können.

Wie bereits beschrieben wurde, können Token aus einem Peer-to-Peer-Netzwerk eingefroren und z.B. an eine Blockchainifizierte Datenbank übertragen werden. D.h. Nutzer können ein zweites ,Wallet' in dieser Datenbank aufweisen. Transaktionen zwischen den Nutzern bzw. deren Wallets können als performante Datenbanktransaktionen durchgeführt werden. Nach Ablauf einer bestimmten Zeit oder der Beendigung der Gesamttransaktion kann das Ergebnis auf das ursprüngliche Peer-to-Peer-Netzwerk zurückgeschrieben werden. Als Beispiel für die Ausführung mehrerer Blockchains kann eine IoT Blockchain, wie DAT tangle, dazu benutzt werden, sicher IoT Daten zu erfassen, und diese in einem zweiten Peer-to-Peer-Netzwerk, wie z.B. BigchainDB, als Input für die Durchführung von Transaktionen zu speichern.

Darüber hinaus können Daten-Feeds (data feeds) von der Peer-to-Peer-Anwendung (sogenannte "smart oracles") bereitgestellt werden. Daten-Feeds können weitere Daten über einen Austauschvorgang aus mindestens einer weiteren Quelle bereitstellen. Beispielsweise können weitere Wetterdaten und/oder Stromnetzstatusdaten von einem meteorologischen Anbieter und/oder einem weiteren Netzstatusanbieter bereitgestellt werden. Daten können aus vertrauenswürdigen Quellen empfangen und in der Peer-to-Peer-Anwendung gespeichert oder über die Peer-to-Peer-Anwendung auf einer dezentralen Datenspeicheranordnung gespeichert werden.

Informationen zwischen Peers können durch ein Peer-to-Peer-Messaging-System ausgetauscht werden. Dies bedeutet, dass ein Peer eine Nachricht an einen anderen Peer senden kann, um eine Information zu übermitteln oder eine Aktion auszulösen. Nachrichten (z.B. Messdaten, Synchronisationsdaten bzw. Steuerdaten) können als Klartext, signiert, hashed, zeitgestempelt und/oder verschlüsselt werden. Dies bedeutet, dass nicht alle Daten, die zwischen Peers ausgetauscht werden, auf der Peer-to-Peer Anwendung gespeichert werden müssen.

In einer weiteren Ausführungsform kann das mindestens eine Peer-to-Peer-Netzwerk durch mehrere Peers und ein Peer-to-Peer-Modul gebildet sein, wie beispielsweise das erste Peer-to-Peer-Modul einer ersten Austauschvorrichtung, ein zweites Peer-to-Peer-Modul einer zweiten Austauschvorrichtung, usw. Ein Peer-to-Peer-Modul kann nur so konfiguriert sein, dass es mit der Vielzahl von Peers kommunizieren kann. Mit anderen Worten, das Peer-to-Peer-Modul ist kein Peer des Peer-to-Peer-Netzwerks, sondern nur ein Teilnehmer. Ein solches Peer-to-Peer-Modul umfasst nicht die Peer-to-Peer-Anwendung, sondern stellt nur ein Schnittstellenmodul, wie eine Anwendungsprogrammierschnittstelle (API), und eine dezentrale Applikation zur Kommunikation mit den Peers des Peer-to-Peer-Netzwerks bzw. mit der Peer-to-Peer-Anwendung, wie eine Blockchain oder ein smart contract einer Peer-to-Peer-Anwendung, bereit. Beispielsweise kann ein solches Peer-to-Peer-Modul entweder Klartext- oder verschlüsselte Informationen senden oder eine sichere Verbindung (z.B. Tunnel) zu einem weiteren Peer-to-Peer Modul (z.B. zum Übertragen eines Tokenstroms) erzeugen, um mit dem Peer-to-Peer-Modul oder dem Peer-to-Peer-Netzwerk zu kommunizieren. Dies ermöglicht eine Verringerung der erforderlichen Rechenleistung des Peer-to-Peer-Moduls.

In einer Ausführungsform des Peer-to-Peer-Netzwerks kann es nur einen validierenden Peer oder einen vollständigen Knoten geben, z.B. kann nur ein Knoten konfiguriert werden, um einen Validierungsprozess durchzuführen, wie einen Austauschvorgang oder einen Synchronisationsprozess, und einen oder mehrere Beobachtungs- (oder Überwachungs-) Peers. Ein Beobachtungspeer kann einige Transaktionen validieren, um eine Vertrauensstufe zu etablieren, aber er validiert nicht alle Transaktionen, die durch den validierenden Peer durchgeführt werden.

In einer weiteren Ausführungsform kann das Peer-to-Peer-Modul einer der Peers sein. In diesem Fall umfasst das Peer-to-Peer-Modul zumindest einen Teil der Peer-to-Peer-Anwendung. Insbesondere kann das Peer-to-Peer-Modul vorzugsweise den gesamten Dateninhalt der Peer-to-Peer-Anwendung umfassen oder auf die in einem anderen Peer gespeicherten Informationen zugreifen. Beispielsweise kann das Peer-to-Peer-Modul ein sogenannter "light node" oder eine dezentrale Anwendung (DAPP) sein, die mit einem entfernten Peer (fest) verbunden ist.

Es wird angemerkt, dass im vorliegenden Fall gemäß einer Ausführungsform das Peer-to-Peer-Modul mindestens eine API umfasst, die konfiguriert ist, um mit der Peer-to-Peer-Anwendung zu kommunizieren. Zusätzlich zu der API umfasst das Peer-to-Peer-Modul eine dezentrale Software-Anwendung, die lokale Algorithmen umfasst, die zumindest konfiguriert sind, um Daten, wie z. B. Messdaten, zu erzeugen und über die API an die Peer-to-Peer-Anwendung zu übertragen. Die dezentrale Anwendung "Dapp" ist zumindest so konfiguriert, dass sie die Daten verarbeitet und überträgt.

Vorzugsweise werden die Daten signiert oder verschlüsselt oder können über einen kryptographisch gesicherten Tunnel oder eine gesicherte Internetverbindung an einen Peer oder ein weiteres Peer-to-Peer-Modul übertragen werden. In einer weiteren Ausführungsform ist auch die Peer-to-Peer-Anwendung selbst im Peer-to-Peer-Modul implementiert, d.h. das Peer-to-Peer-Modul ist ein Peer des Peer-to-Peer-Netzwerks, der die dezentrale Applikation, die API und die Peer-to-Peer-Anwendung umfasst.

Daten und Transaktionen, die auf der Blockchain gespeichert sind, stellen keine "transaktionale Privatsphäre" zur Verfügung. Transaktionen zwischen Pseudonymen können (oft) in Klartext auf der Blockchain gespeichert werden. In manchen Fällen werden die auf der Blockchain gespeicherten Daten verschlüsselt und die Schlüssel können über die Blockchain gehandhabt werden. Transaktionen zwischen Pseudonymen werden in Klartext auf der Blockchain gespeichert. Sichere Transaktionen oder Ausführungen von Computer-Codes können mit kryptografischen Werkzeugen, wie z. B. "zero knowledge" (zk) Proofs oder "zk Succinct Non-interactive Arguments" (zk-SNARK) erreicht werden. Transaktionen oder Algorithmen sind in zwei Teile unterteilt: ein Smart contract über die Blockchain und ein private contract. Ein Datenschutzbewahrungsprotokoll sorgt für die Privatsphäre der Daten und die Richtigkeit der Codeausführung (SNARK-Überprüfung erfolgt über den Smart-Vertrag auf Kette). Die private Auftragsberechnung kann durch einen Satz von Peers, Off-Chain-Computern oder in einer "measured launch environment" oder einer sicheren Hardware-Enklave für die Bescheinigung und Abdichtung (sealing) durchgeführt werden, die nicht durch einen anderen Softwarecode, der auf den Geräten ausgeführt wird, manipuliert werden können. In einer alternativen Ausführungsform können sichere Multi-Party-Computing (sMPC) -Systeme für die Transaktions-Privatsphäre genutzt werden. Beispiele für Datenschutzbewahrungsprotokolle und Berechnungen sind HAWK und MIT Enigma.

Mit "zero knowledge" (zk Proofs) können die Parteien sehen, dass der Algorithmus in einem privaten Vertrag korrekt ausgeführt wird, aber die Eingabedaten werden nicht an die Parteien weitergegeben. Darüber hinaus kann eine selektive Privatsphäre durch die Freigabe von Schlüsseln zur Entschlüsselung von Transaktionen für Berichts- und Prüfungszwecke bereitgestellt werden.

Zur sicheren Bereitstellung von Codes und/oder Daten in ein Gerät kann eine vertrauenswürdige Ausführungsumgebung wie Intel SGX oder TPM oder Direct Anonymous Attestation Modul mit einem Peer-to-Peer-Modul integriert werden.

Auch können weitere kryptographische Verfahren zur Herstellung einer transaktionalen Privatsphäre genutzt werden (z.B. Ring Signatures, Stealth Addresses oder Pedersen Commitments).

Ähnlich kann in einer weiteren Ausführungsform ein besonders großes Peer-to-Peer-Netzwerk in zwei oder mehr (physikalische oder logische oder dynamisch virtuelle) Cluster aufgeteilt werden. In einem entsprechenden Peer-to-Peer-Netzwerk kann beispielsweise eine Validierung (einer Teilmenge von Transaktionen) nur von den Mitgliedern eines Clusters durchgeführt werden (eine Teilmenge von Peers, z. B. das Aufteilen einer Blockchain zur Verbesserung der Skalierbarkeit). In einer weiteren Ausführungsform kann die Peer-to-Peer-Anwendung unter Verwendung mehrerer Blockchains gebildet werden. Diese Blockchains sind über Frameworks, wie "sidechains" oder smart contracts oder Interledger Protokolle, verbunden.

Ein weiterer Aspekt der Anmeldung ist eine erste Austauschvorrichtung zum Austauschen von elektrischer Energie mit einer zweiten Austauschvorrichtung. Die erste Austauschvorrichtung umfasst mindestens ein (erstes) Energieaustauschmodul, zumindest eingerichtet zum Abgeben von elektrischer Energie in Form eines Energiestroms an die zweite, mit der ersten Austauschvorrichtung verbindbare, Austauschvorrichtung während eines Austauschvorgangs. Die erste Austauschvorrichtung umfasst mindestens ein erstes, der ersten Austauschvorrichtung zugeordnetes, Peer-to-Peer-Modul, eingerichtet zum Kommunizieren mit mindestens einer Peer-to-Peer-Anwendung mindestens eines Peer-to-Peer-Netzwerks. Das erste Peer-to-Peer-Modul ist zumindest zum Empfangen eines Tokenstroms während des Austauschvorgangs eingerichtet. Die erste Austauschvorrichtung umfasst mindestens ein Synchronisationsmodul, eingerichtet zum Synchronisieren des von der ersten Austauschvorrichtung an die zweite Austauschvorrichtung abgegebenen Energiestroms mit dem empfangenen Tokenstrom während des Austauschvorgangs.

Die anmeldungsgemäße erste Austauschvorrichtung kann insbesondere eine Ladestation sein. Das zuvor beschriebene System kann mindestens eine anmeldungsgemäße erste Austauschvorrichtung umfassen.

Ein weiterer Aspekt der Anmeldung ist eine zweite Austauschvorrichtung zum Austauschen von elektrischer Energie mit einer ersten Austauschvorrichtung. Die zweite Austauschvorrichtung umfasst mindestens ein Energieaustauschmodul, zumindest eingerichtet zum Empfangen von elektrischer Energie in Form eines Energiestroms von der ersten, mit der zweiten Austauschvorrichtung verbindbaren, Austauschvorrichtung während eines Austauschvorgangs. Die zweite Austauschvorrichtung umfasst mindestens ein zweites, der zweiten Austauschvorrichtung zugeordnetes, Peer-to-Peer-Modul, eingerichtet zum Kommunizieren mit mindestens einer Peer-to-Peer-Anwendung mindestens eines Peer-to-Peer-Netzwerks. Das zweite Peer-to-Peer-Modul ist zumindest zum Aussenden eines Tokenstroms während des Austauschvorgangs eingerichtet. Die zweite Austauschvorrichtung umfasst mindestens ein Synchronisationsmodul, eingerichtet zum Synchronisieren des von der zweiten Austauschvorrichtung an die erste Austauschvorrichtung abgegebenen Tokenstroms mit dem empfangenen Energiestrom während des Austauschvorgangs.

Die anmeldungsgemäße zweite Austauschvorrichtung kann insbesondere ein Elektrofahrzeug sein. Das zuvor beschriebene System kann mindestens eine anmeldungsgemäße zweite Austauschvorrichtung umfassen.

Ein weiterer Aspekt der Anmeldung ist ein Verfahren zum Betreiben einer Austauschvorrichtung, insbesondere einer zuvor beschriebenen ersten Austauschvorrichtung. Das Verfahren umfasst:
- Abgeben von Energie in Form eines Energiestroms an von einer ersten Austauschvorrichtung an eine zweite, mit der ersten Austauschvorrichtung verbindbare, Austauschvorrichtung während eines Austauschvorgangs,
- Empfangen von einem Tokenstrom während des Austauschvorgangs durch ein Peer-to-Peer-Modul, und
- Synchronisieren des Energiestroms mit dem empfangenen Tokenstrom während des Austauschvorgangs.

Das Verfahren kann insbesondere zum Betreiben eines zuvor beschriebenen Systems eingesetzt werden. Alternativ oder zusätzlich kann das Verfahren das Synchronisieren von Energiestrom und Tokenstrom mit mindestens einer (weiteren) Steuervorrichtung eines Verbrauchers, Anbieters oder Netzbetreibers umfassen, wie oben beschrieben.

Ein weiterer Aspekt der Anmeldung ist ein Verfahren zum Betreiben einer Austauschvorrichtung, insbesondere einer zuvor beschriebenen zweiten Austauschvorrichtung. Das Verfahren umfasst:
- Empfangen von Energie in Form eines Energiestroms von einer mit der zweiten Austauschvorrichtung verbindbaren ersten Austauschvorrichtung während eines Austauschvorgangs,
- Aussenden von einem Tokenstrom während des Austauschvorgangs durch ein zweites Peer-to-Peer-Modul, und
- Synchronisieren des Energiestroms mit dem empfangenen Tokenstrom während des Austauschvorgangs

Das Verfahren kann insbesondere zum Betreiben eines zuvor beschriebenen Systems eingesetzt werden.

Ein noch weiterer Aspekt der Anmeldung ist eine Peer-to-Peer-Anwendung für ein Peer-to-Peer Netzwerk. Die Peer-to-Peer-Anwendung umfasst mindestens ein Synchronisationsmodul, eingerichtet zum Synchronisieren eines von einer ersten Austauschvorrichtung an eine zweite Austauschvorrichtung abgegebenen Energiestroms mit einem von der ersten Austauschvorrichtung empfangenen Tokenstroms, dessen Aussendung von der zweiten Austauschvorrichtung bewirkt wird, während eines Austauschvorgangs.

Die zuvor beschriebenen Vorrichtungen und Module können zumindest teilweise durch Software- und/oder zumindest teilweise durch Hardwarekomponenten gebildet sein. Die Peer-to-Peer-Anwendung kann insbesondere ein Computerprogramm sein.

Wie bereits beschrieben wurde, ist ein Peer-to-Peer-Modul eigerichtet, einen Zugang zu dem Peer-to-Peer-Netzwerk bereitzustellen. Beispielsweise kann das Peer-to-Peer-Modul Token senden bzw. Token-Transaktionen aus einem Wallet, das dem Peer-to-Peer-Modul (oder seinem Nutzer) zugeordnet ist, auslösen und/oder den Empfang eines Tokens in dem Wallet überprüfen.

Senden und/oder Empfangen der Token kann direkt auf dem Peer-to-Peer-Netzwerk und/oder über einen anderen Mechanismus (oder Peer-to-Peer Netzwerk), wie Side-Chains, Payment- oder State-Channels, Trusted Computing Systeme, Polkadot, Interledger Protocoll Transaktionen oder blockhainifizierte Datenbanken, wie BigchainDB durchgeführt werden. Das Peer-to-Peer-Modul kann beispielsweise mit einer solchen Technologie verbunden sein, um Token zu senden und/oder den Empfang zu prüfen.

Zusätzlich kann das Senden von Token an mindestens eine Bedingung geknüpft sein. Ein Beispiel für eine Bedingung ist das Empfangen von Mess- oder Zählwerten. Ein Abgleich von Tokenstrom mit Messdaten kann über das Synchronisierungsmodel stattfinden.

Damit das Synchronisierungsmodul (möglicherweise fremden) Mess- oder Zähleinrichtungen vertrauen kann, ist es vorstellbar, dass diese Mess- oder Zähleinrichtungen in ein weiteres Peer-to-Peer Netzwerk integriert sind. Über dieses weitere Peer-to-Peer Netzwerk können die Integrität und Authentizität von Daten aus (ggf. fremden) Mess- oder Zähleinrichtungen gewährleistet werden.

Es ist vorstellbar, dass eine Austauschvorrichtung mit mehreren Peer-to-Peer Modulen ausgestattet ist oder ein Peer-to-Peer Modul einer Austauschvorrichtung mit mehreren Peer-to-Peer Netzwerken verbunden ist.

Beispiele für einen Token bzw. für den Wert einer digitale Einheit sind Krypto-Währungen, wie Bitcoin oder Ether oder IOTA Token, Besitzanteile an Wertanlagen, physischen Anlagen, an einer Immobilie, an Kunst, an Geistigem Eigentum, einer Firma oder anderen Formen von Wertanlagen, Loyalitäts-/Bonussystem-/Spielsystemeinheiten, Einheiten für Zugangs- oder Nutzungsversprechen (z.B. Nutzung einer Anlage oder Zugang zu Daten), oder andere vergleichbare Konstrukte.

Der Besitzer eines Token kann diesen nur einmal ausgeben. In einem Energieaustauschsystem kann beispielsweise ein Energieanbieter seine Energie gegen einen solchen Token tauschen, der für den Anbieter dann einen Gegenwert darstellt. Ein solcher Token kann in einem Peer-to-Peer-Netzwerk bzw. einer Peer-to-Peer-Anwendung - z.B. auf einer Blockchain, einem DAG Tangle oder eine blockchainifizierten Datenbank - generiert, verwaltet und ausgetauscht werden. Ein Nutzer (z.B. Mensch, Maschine oder (Software-)Anwendung) eines Peer-to-Peer-Netzwerkes kann eine öffentliche Identität bzw. Kennung in dem Peer-to-Peer-Netzwerk haben. Damit kann ein Zugang zu einem digitalen Wallet verbunden sein. Ein solcher Token wird zwischen digitalen Wallets, die beispielsweise an ein Peer-to-Peer-Modul angebunden sein können, ausgetauscht.

Ferner kann ein Token als direkte Transaktion in dem Peer-to-Peer-Netzwerk zwischen Entitäten ausgetauscht werden. Bei Peer-to-Peer-Netzwerken kann ein Austausch beispielsweise in Form von Transaktionenraten erfolgen, die über eine zeitliche Abfolge den Austausch von zwei oder mehreren Token zwischen zwei Entitäten bzw. Nutzern ermöglichen (z.B. DAG tangle).

Alternativ oder zusätzlich kann ein Token unter mindestens einer bestimmten Bedingung in dem Peer-to-Peer-Netzwerk eingefroren (locked) und z.B. außerhalb des Peer-to-Peer-Netzwerkes (in ggf. mehrere Schritten und bei höheren Transaktionsraten) ausgetauscht werden. Das Ergebnis eines solchen Austauschs wird nach einer gegebenen Zeit wieder unter Anwendung kryptographischer Verfahren, wie Signaturen, auf das Peer-to-Peer-Netzwerk als eine (oder mehrere) Transaktion geschrieben. Beispiele für derartige Mechanismen sind Side-Chains, Payment- oder State-Channels, Trusted Computing Systeme, Polkadot oder Interledger Protocoll Transaktionen.

Das Interledger Protocoll erlaubt beispielweise die Anwendung von Crypto-Bedingungen, um beispielsweise einen Austausch unter bestimmten Bedingungen durchzuführen (z.B. If-This-Then-That).

Gemäß einem derartigen Mechanismus können auch Token aus einem Peer-to-Peer-Netzwerk eingefroren und an eine Peer-to-Peer-Speicheranordnung bzw. -Datenbank übertragen werden. D.h. Nutzer können ein zweites ,Wallet' in dieser Datenbank haben, in das Token übertragen werden können. Transaktionen zwischen den Nutzern können dann als performante Datenbanktransaktionen durchgeführt werden. D.h. es kann in einer solchen Peer-to-Peer-Datenbank, insbesondere Blockchain-Datenbank, eine Vielzahl von Token mit einem Kleinstwert (z.B. Sub Euro-Cent Beträge) effizient zwischen Nutzern ausgetauscht werden. In einer Ausführung kann ein solcher Token bereits in der Peer-to-Peer-Datenbank erzeugt werden.

Wie bereits beschrieben wurde, kann der Austausch einer Vielzahl von Token zwischen zwei (oder mehreren) Austauschvorrichtungen über einen definierten Zeitraum Tokenstreaming genannt werden. D.h. es wird pro Zeiteinheit ein Token mit einer definierten Werteinheit zwischen den Austauschvorrichtungen bzw. Nutzern ausgetauscht. Dieser Austausch erstreckt sich über zwei oder mehr Zeiteinheiten.

Wie bereits beschrieben wurde, kann eine Austauschvorrichtung in der Peer-to-Peer-Anwendung registriert sein. Insbesondere können in einer weiteren Ausführungsform Austauschvorrichtungen in einem Synchronisationsmodul- und Steuerungs-Register in der Peer-to-Peer-Anwendung mit mindestens einer Eigenschaft bzw. einem Attribut registriert sein. Beispielhafte und nicht abschließende Attribute sind unterstützte Mechanismen zum Tokenstreaming, verwendbares Synchronisationsmodul (z.B. inkl. Kennung), zu verwendetes Wallet, Reputation bzw. Qualität technischer Parameter, unterstützte Kommunikations- und / oder Dialogprotokolle für die Anbindung von Steuervorrichtungen und/oder Synchronisationsmodulen und/oder unterstützte Steuerungs- und/oder Synchronisationsmechanismen.

In einer Ausführungsform kann jeweils ein Synchronisationsmodul in den beiden Austauschvorrichtungen integriert sein. In diesem Fall kann eine Kommunikation zwischen den beiden Synchronisationsmodulen hergestellt werden. Vorzugsweise in einem Dialogprotokoll können sich die Synchronisationsmodule über die Synchronisationsmechanismen austauschen. Der Dialog kann beispielsweise über ein Peer-to-Peer-Kommunikationsprotokoll durchgeführt werden. Über diesen Dialog kann insbesondere festgelegt werden, welches das primäre Synchronisationsmodul (also das federführende) für die Steuerung von Token- und Energiestrom ist, wie die Startphase abzuwickeln ist, was bei Abweichungen passiert und/oder wie mit einer Abweichung vorzugehen ist (z.B. wenn das sekundäre Synchronisationsmodul über seine Detektoren andere Messwerte hat als das primäre Synchronisationsmodul). Es kann auch geregelt werden, wie vorzugehen ist, wenn bspw. aufgrund technischer Störungen ein Tokenstrom gestoppt ist oder nicht angepasst werden kann. Die Austauschvorrichtungen können sich dann beispielsweise einigen, dass über andere Mechanismen die finanzielle Transaktion durchgeführt wird (z.B. Escrow Payment mit Hilfe eines Smart Contracts, oder Pre- oder Post Payment). Oder Token- und Energiestrom werden gestoppt.

Damit der Dialog zwischen den Synchronisationsmodulen der Austauschvorrichtungen zustande kommen und insbesondere der Austauschprozess (schnell) gestartet werden kann, kann beispielsweise ein bestehendes Protokoll genutzt werden (z.B. nach ISO 15118) oder die Austauschvorrichtungen / Synchronisationsmodule können das Synchronisationsmodul- und Steuerungs-Register abfragen, um Kennungen, Reputationen sowie Synchronisations- oder Steuerungsmechanismen der anderen Austauschvorrichtung zu erfassen. Dies kann von Vorteil sein, um in einem System vieler Austauschvorrichtungen eine Optimierung durchzuführen.

Es versteht sich, dass der hier beschriebene Gegenstand auch auf andere Austauschsysteme anwendbar ist. Beispiele sind Austauschsysteme über Rohrleitungssysteme für fluide Medien, wie Gase oder Flüssigkeiten, Austauschsysteme über Rohrleitungssysteme für granulare Medien, Austauschsysteme über Robotersysteme für gleichartige Objekte (z.B. gleichartige Metall- oder Plastikteile).

Die Merkmale der Verfahren, Systeme, Vorrichtungen, Peer-to-Peer Anwendungen und Computerprogramme sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein. Die Erfindung wird durch die beigefügten Ansprüche bestimmt.

Es gibt nun eine Vielzahl von Möglichkeiten, das anmeldungsgemäße System, das anmeldungsgemäße Verfahren, die anmeldungsgemäße Vorrichtung und die anmeldungsgemäße Peer-to-Peer-Anwendung auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines Ausführungsbeispiels eines Systems gemäß der vorliegenden Anmeldung;
- Fig. 2: eine schematische Ansicht eines weiteren Ausführungsbeispiels eines Systems gemäß der vorliegenden Anmeldung;
- Fig. 3: eine schematische Ansicht eines weiteren Ausführungsbeispiels eines Systems gemäß der vorliegenden Anmeldung;
- Fig. 4: eine schematische Ansicht eines Ausführungsbeispiels einer Peer-to-Peer-Anwendung gemäß der vorliegenden Erfindung;
- Fig. 5: eine schematische Ansicht eines weiteren Ausführungsbeispiels eines Systems gemäß der vorliegenden Erfindung;
- Fig. 6: ein Diagramm eines Ausführungsbeispiels eines Verfahrens gemäß der vorliegenden Erfindung;

In den Figuren werden für gleiche Elemente gleiche Bezugszeichen verwendet.

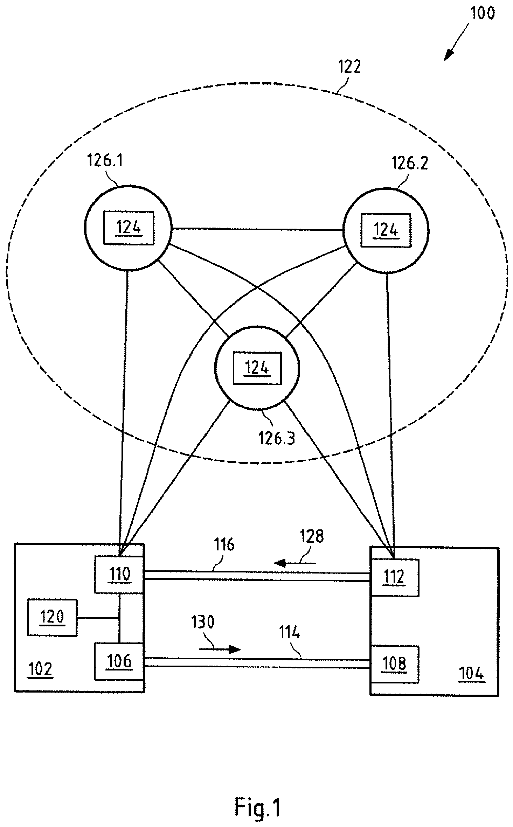

Figur 1 zeigt eine schematische Ansicht eines Ausführungsbeispiels eines Systems 100 zum Austauschen von elektrischer Energie. Das System 100 umfasst eine erste Austauschvorrichtung 102. Die erste Austauschvorrichtung 102 ist zumindest zum Abgeben von elektrischer Energie bzw. Leistung konfiguriert. Vorzugsweise kann die erste Austauschvorrichtung 102 für einen bidirektionalen Energieaustausch eingerichtet sein.

Die erste Austauschvorrichtung 102 kann beispielsweise mit einem (nicht gezeigten) Stromnetz (oder einem Energiespeicher oder Erzeuger) verbunden sein, um elektrische Energie zumindest abzugeben. Es versteht sich, dass alternativ oder zusätzliche andere Energiequellen vorgesehen sein können. Die erste Austauschvorrichtung 102 verfügt vorliegend über mindestens ein erstes Energieaustauschmodul 106, eingerichtet zum Abgeben von elektrischer Energie an mindestens eine mit dem ersten Energieaustauschmodul 106 elektrisch verbindbare zweite Austauschvorrichtung 104, Beispielsweise kann eine elektrische Leitung 114 (z.B. ein Kabel) vorgesehen sein. Es versteht sich, dass die elektrische Energie auch drahtlos übertragen werden kann. Die elektrische Leitung kann zwischen dem ersten Energieaustauschmodul 106 und einem zweiten Energieaustauschmodul 108 der zweiten Austauchvorrichtung 104 zumindest für einen Austauschvorgang angeordnet sein.

Das erste Energieaustauschmodul 106 ist eingerichtet, während eines Austauschvorgangs elektrische Energie in Form eines Energiestroms 130 an die zweite Austauchvorrichtung 104, insbesondere das zweite Austauchmodul 108, zu übertragen.

Die zweite Austauschvorrichtung 104 kann beispielsweise ein elektrischer Verbraucher und/oder ein elektrischer Speicher sein oder zumindest über einen elektrischen Verbraucher und/oder einen elektrischen Speicher verfügen. Es versteht sich, dass die zweite Austauschvorrichtung 104 zusätzlich über mindestens einen elektrischen Erzeuger verfügen oder mit mindestens einer elektrischen Stromquelle verbunden werden kann.

Ein wesentlicher Unterschied zu einem Stand der Technik System besteht darin, dass in dem System 100 keine zentrale Instanz vorgesehen ist. Vorliegend weist das System 100 mindestens ein Peer-to-Peer-Netzwerk 122 bzw. ein Rechner-Rechner-Netzwerk 122 auf. Das Peer-to-Peer-Netzwerk 122 umfasst eine Vielzahl von Peers 126.1 bis 126.3 (auch Knoten bzw. Rechner genannt). Es versteht sich, dass mehr als die dargestellten drei Peers 126.1 bis 126.3 vorgesehen sein können. Ein Peer-to-Peer-Netzwerk 122 zeichnet sich vorliegend dadurch aus, dass vorzugsweise jeder Knoten und/oder Teilnehmer mit jedem anderen Knoten und/oder Teilnehmer verbunden ist. Dies kann über ein drahtloses oder drahtgebundenes Netzwerk erfolgen. Beispielsweise kann das Internet verwendet werden.

Zudem sind die Peers 126.1 bis 126.3 als gleichberechtigte Peers 126.1 bis 126.3 konfiguriert, wodurch sie sich von einer herkömmlichen Server-Client-Struktur unterscheiden.

Die dargestellten drei Peers 126.1 bis 126.3 umfassen (jeweils) eine Peer-to-Peer-Anwendung 124. Wie zu erkennen ist, ist auf jedem Peer 126.1 bis 126.3 die gleiche Peer-to-Peer-Anwendung 124 implementiert. Vorzugsweise kann die Peer-to-Peer-Anwendung 124 ein von insbesondere allen Teilnehmern (nicht nur den Peers) des Peer-to-Peer-Netzwerks 122 einsehbares öffentliches Register 124 sein. Jeder Peer 126.1 bis 126.3 weist vorzugweise das (gesamte) öffentliche Register 124 auf. Auch kann vorgesehen sein, dass auf einem Peer nur ein Teil des Registers vorgesehen ist. In einer besonders bevorzugten Ausgestaltung kann die Peer-to-Peer-Anwendung 124 eine Blockchain 124 sein.

Ferner ist zu erkennen, dass vorliegend der ersten Austauschvorrichtung 102 ein erstes Peer-to-Peer-Modul 110 zugeordnet ist. Insbesondere ist im vorliegenden Ausführungsbeispiel das erste Peer-to-Peer-Modul 110 in der ersten Austauschvorrichtung 102 integriert. Vorliegend ist der zweiten Austauschvorrichtung 104 ein zweites Peer-to-Peer-Modul 112 zugeordnet. Das zweite Peer-to-Peer-Modul 110 ist vorliegend in der zweiten Austauschvorrichtung 104 integriert.

Ein Peer-to-Peer-Modul 110, 112 ist dazu eingerichtet, zumindest mit dem Peer-to-Peer-Netzwerk 122, also den Peers 126.1 bis 126.3 des Peer-to-Peer-Netzwerks 122, zu kommunizieren. Mit anderen Worten ist ein Peer-to-Peer-Modul 110,112 bzw. die zu diesem Peer-to-Peer-Modul 110, 112 korrespondierende Austauschvorrichtung 102, 104 zumindest Teilnehmer des Peer-to-Peer-Netzwerks 122. Hierbei sind jedem Teilnehmer des Peer-to-Peer-Netzwerks 122 vorzugsweise sämtliche Teilnehmer des Peer-to-Peer-Netzwerks 122 bekannt.

Vorliegend kann mittels der Peer-to-Peer-Anwendung 124 ein Austauschvorgang, insbesondere ein nachfolgend beschriebener Synchronisationsprozess eines Austauschvorgangs, von mindestens einem Teil (>1) der Peers 126.1 bis 126.3, vorzugsweise von sämtlichen Peers 126.1 bis 126.3, überwacht (und/oder abgerechnet) werden.

Zumindest während eines Austauschvorgangs kann eine Kommunikationsverbindung 116 (z.B. über einen drahtlosen und/oder drahtgebundenen Kommunikationskanal) zwischen den Peer-to-Peer-Modulen 110, 112 herstellt sein. Vorzugsweise kann die elektrische Leitung 114 (z.B. ein Ladekabel) zusätzlich den Kommunikationskanal umfassen. Insbesondere kann ein Tunnel herstellt werden. Zumindest während des Austauschvorgangs empfängt das erste Peer-to-Peer-Modul 110 einen Tokenstrom 128.

Über diesen Kommunikationskanal kann beispielsweise zu Beginn des Austauschvorgangs eine Kennung und/oder eine Konfiguration mindestens einer beteiligten Austauschvorrichtung ausgetauscht werden (z.B. mit Mechanismen Tokenstreaming, verwendete Synchronisationsmodule).

Auch kann der Tokenstom über ein so genanntes Partion-tolerant Peer-to-Peer-Netzwerk durchgeführt werden (z.B. IOTA DAG tangle). Bei einem Partion-tolerant Peer-to-Peer-Netzwerk können Cluster von Peer-to-Peer-Netzwerken existieren, die (temporär) keine Kommunikationsverbindungen untereinander haben. Tokenstreaming und Validierung der Transaktionen kann in diesem Cluster durchgeführt und ggf. zu einem späteren Zeitpunkt mit dem Haupt Peer-to-Peer-Netzwerk ("Mainnet") synchronisiert werden. Aufgrund der temporär fehlenden Kommunikationsverbindungen ist dieses Cluster als ein Offline Fall zu verstehen. Dieses Cluster kann durch mindestens jeweils ein Peer-to-Peer-Modul für die zwei Austauschvorrichtungen sowie einem Kommunikationskanal zwischen den beiden Austauschvorrichtungen gebildet sein. In dem Cluster können IoT Daten validiert und authentifiziert und Tokens ausgetauscht werden.

In einer bevorzugten Ausführung kann vor der Transaktion das Cluster definiert, Identitäten und öffentliche Schlüssel in den Peer-to-Peer-Modulen gespeichert, sowie Token auf dem Mainnet mit kryptographischen Bedingungen eingefroren werden. Zudem kann ein Mechanismus für das Cluster definiert werden, nach dem die Token in dem Cluster ausgetauscht werden können. Sollte es dann später zu einer Unterbrechung der Kommunikationsverbindung (Offline Fall) kommen, können Tokens in dem Cluster ausgetauscht werden. Da die Token auf dem Mainnet eingefroren sind, kann ein sogenanntes "Double Spending" ausgeschlossen werden. Ist der Cluster zu einem späteren Zeitpunkt wieder online, wir das Ergebnis des Tokenstreaminings mit dem Mainnet synchronisiert.

Die Aussendung des Tokenstroms 128 wird von dem zweiten Peer-to-Peer-Modul 112 bewirkt. Vorliegend sendet das zweite Peer-to-Peer-Modul 112 den Tokenstrom 128 aus. Bei anderen Varianten kann vorgesehen sein, dass das zweite Peer-to-Peer-Modul 110 ein separates Modul ansteuert und das separate Modul den Tokenstrom (unter Steuerung durch das zweite Peer-to-Peer-Modul 112) an das erste Peer-to-Peer-Modul 110 aussendet.

Darüber hinaus umfasst das dargestellte System 100 ein Synchronisationsmodul 120. Das Synchronisationsmodul 120 ist vorliegend in der ersten Austauschvorrichtung 102 integriert. Bei anderen Varianten kann das Synchronisationsmodul 120 auch in einer anderen Einrichtung integriert sein (z.B. zweite Austauschvorrichtung, Telekommunikationskomponenten, Steuerungsinstanz mehrerer Austauschvorrichtungen oder einem zentralen System für Austauschvorrichtungsinfrastrukturen, wie Ladenetzwerke). Das Synchronisationsmodul 120 ist zum Synchronisieren des von der ersten Austauschvorrichtung 102 an die zweite Austauschvorrichtung 104 abgegebenen Energiestroms 130 mit dem empfangenen Tokenstrom 128 während des Austauschvorgangs eingerichtet.

Wie bereits beschrieben wurde, zeichnet sich ein Energiestrom dadurch aus, dass pro Zeiteinheit eine bestimmte Energiemenge (z.B, ein bestimmter Strom, eine bestimmte Leistung, etc.) (nahezu kontinuierlich) übertragen wird. Dies kann auch als "Energiestreaming" bezeichnet werden. In entsprechender Weise kann ein Tokenstrom gebildet werden. Dies kann auch als "Tokenstreaming" bezeichnet werden.

Das Synchronisationsmodul 120 ist vorliegend mit dem ersten Energieaustauschmodul 106 und insbesondere mit dem ersten Peer-to-Peer-Modul 110 gekoppelt. Das Synchronisationsmodul 120 kann mindestens ein (nicht gezeigtes) Detektionsmittel umfassen, um zumindest eine Änderung des Tokenstroms 128 zu erfassen. Das Synchronisationsmodul 120 ist insbesondere zum Synchronisieren des Energiestroms 130 mit dem Tokenstrom 128 derart eingerichtet ist, dass bei Detektion einer Änderung des Tokenstroms 128 eine entsprechende Änderung des Energiestroms 130 bewirkt werden kann. Wenn beispielsweise detektiert wird, dass sich der Tokenstrom 128 reduziert hat, kann eine entsprechende Reduzierung des Energiestroms 130 bewirkt werden. Beispielsweise kann das Synchronisationsmodul 120 einen entsprechenden Steuerdatensatz an das erste Energieaustauschmodul 106 übertragen.

Wenn beispielsweise detektiert wird, dass sich der Tokenstrom 128 erhöht hat, kann eine entsprechende Erhöhung des Energiestroms 130 bewirkt werden. Für den Fall, dass eine Erhöhung des Energiestroms 130 aufgrund des Erreichens der maximal zulässigen Übertragungsrate nicht weiter erhöht werden kann, kann das Synchronisationsmodul 120 zusätzlich eingerichtet sein, eine entsprechende Information an die zweite Austauschvorrichtung 104 zu übertragen. Beispielsweise kann dies unter Nutzung der Peer-to-Peer-Module 110, 112 oder durch andere Mittel erfolgen. Alternativ (oder zusätzlich) kann das erste Peer-to-Peer-Modul 110 eingerichtet sein, das Aussenden eines weiteren Tokenstroms an z.B. das zweite Peer-to-Peer-Modul 112 zu bewirken, um die überschüssigen Tokens zurückzusenden bzw. "zurückzustreamen". Auch können die überschüssigen Token in einen "Escrow" gespeichert werden und beispielsweise zu einem späteren Zeitpunkt oder nach Beendigung des Austauschvorgangs zurück gegeben werden.

Der Synchronisationsprozess wird nachfolgend näher beschrieben werden. Es sei angemerkt, dass das Synchronisationsmodul 120 zumindest teilweise durch einen Controller (z.B. Ladecontroller einer Ladestation) der ersten Austauschvorrichtung 102 gebildet sein kann.

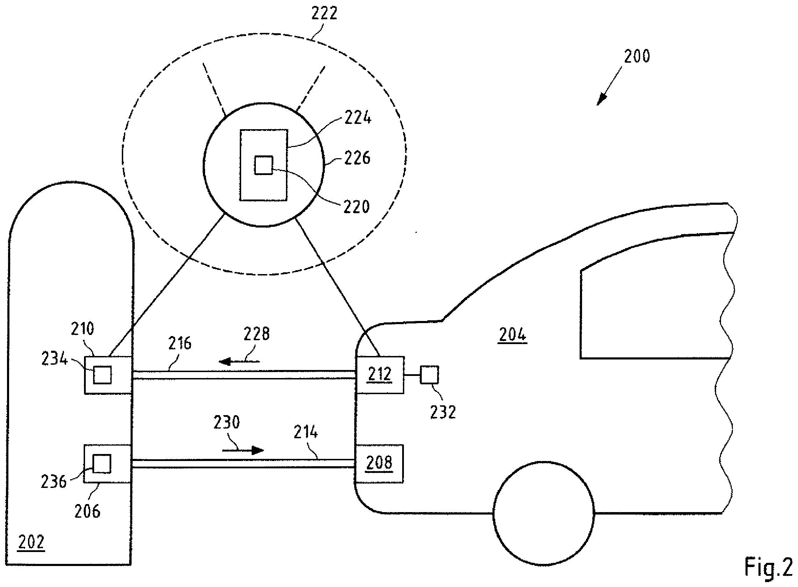

Die Figur 2 zeigt eine schematische Ansicht eines weiteren Ausführungsbeispiels eines Systems 200 zum Austauschen von elektrischer Energie. Das System 200 ist vorliegend ein Ladesystem 200 zum Laden von Fahrzeugen 204. Zur Vermeidung von Wiederholungen werden nachfolgend im Wesentlichen nur die Unterschiede zu dem Ausführungsbeispiel nach Figur 1 beschrieben. Für die anderen Komponenten des Systems 200 wird insbesondere auf die obigen Ausführungen verwiesen. In diesem Ausführungsbeispiel (und auch in den nachfolgenden Ausführungsbeispielen) wurde zu Gunsten einer besseren Übersicht ferner nur ein Peer 226 des Peer-to-Peer-Netzwerks 222 dargestellt. Es versteht sich, dass das Peer-to-Peer-Netzwerk 222 über eine Vielzahl von Peers verfügt.

Die erste Austauschvorrichtung 202 ist vorliegend eine Ladestation 202. Die Ladestation 202 umfasst als Energieaustauschmodul 206 ein Lademodul 206. Es versteht sich, dass zwei oder mehr Lademodule vorgesehen sein können. Das Lademodul 206 ist zum Laden eines Elektrofahrzeugs 204, insbesondere des wiederaufladbaren elektrischen Speichers des Elektrofahrzeugs 204, eingerichtet. Die zweite Austauschvorrichtung 204 ist demnach vorliegend ein Elektrofahrzeug 204. Beispielsweise kann als elektrische Leitung bzw. Verbindung 214 ein Ladekabel eingesetzt werden.

Das Lademodul 206 umfasst vorliegend ein Energiemessmodul 236, eingerichtet zum Messen eines abgegebenen (oder empfangenen) Energiestroms 230. Insbesondere kann eine nahezu kontinuierliche Messung des abgegebenen Energiestroms 230 durchgeführt werden. Darüber hinaus umfasst das erste Peer-to-Peer-Modul 210 ein Tokenmessmodul 234, eingerichtet zum Messen des empfangenen (oder abgegebenen) Tokenstroms 228. Insbesondere kann eine nahezu kontinuierliche Messung des empfangenen Tokenstroms 228 durchgeführt werden.

Darüber hinaus ist das zweite Peer-to-Peer-Modul 212 mit einem Tokenmodul 232 (z.B. wallet) verbunden. In dem Tokenmodul 232 können Tokens gespeichert werden. Das Tokenmodul 232 kann beispielsweise mit einem für den Austauschprozess verknüpften Wallet in dem Peer-to-Peer-Netzwerk 222 sowie einer Dapp gebildet sein. Über die Dapp kann ein kontinuierlicher, diskreter Tokenstrom (bzw. Tokentransfer-Transaktionen) vom Wallet der zweiten Austauschvorrichtung zum Wallet der ersten Austauschvorrichtung gesteuert werden. Dies können Einzeltransaktionen oder eine Transaktionsrate sein. Während eines Austauschvorgangs kann von dem Tokenmodul 232 die für den Austauschvorgang erforderliche Tokenmenge bereitgestellt werden. Das zweite Peer-to-Peer-Modul 212 sendet dann die Token als Tokenstrom an das erste Peer-to-Peer-Modul 210. Die Tokenmenge in dem Tokenmodul 232 reduziert sich entsprechend. Oder sie kann sich erhöhen, wenn im Fall von bidirektionalem Laden ein Energiestrom von der zweiten Austauschvorrichtung zur ersten Austauschvorrichtung fließt. D.h. Energie- und Tokenstrom können sich umkehren. Das Synchronisationsmodul ist in der Lage diese umgekehrten Ströme zu synchronisieren.

In der vorliegenden Ausführungsform werden die erfassten Messdatensätze an das Peer-to-Peer Netzwerk 222, insbesondere die Peer-to-Peer-Anwendung 224, durch das erste Peer-to-Peer-Modul 210 übertragen. Die Peer-to-Peer-Anwendung 224 verfügt vorliegend über ein Synchronisationsmodul 220, insbesondere in Form eines Softwaremoduls 220 (z.B. Smart Contract). Das Synchronisationsmodul 220 empfängt die Messdatensätze nahezu in Echtzeit, wertet die entsprechenden Messdaten nahezu in Echtzeit aus und führt entsprechend den obigen Ausführungen (siehe Figur 1) eine Synchronisation nahezu in Echtzeit durch.

Indem im vorliegenden Ausführungsbeispiel das Synchronisationsmodul 220 in der Peer-to-Peer-Anwendung 224 integriert ist und daher während eines Austauschvorgangs von einer Mehrzahl von Peers 226 ausgeführt wird, kann der Synchronisationsprozess sicher überwacht werden. Manipulationen und insbesondere Diskrepanzen zwischen Energiestrom und Tokenstrom können detektiert und gemeldet werden. Insbesondere kann die Synchronisation (allgemein) das Abbrechen des Austauschvorgangs bei Detektion einer Manipulation oder Diskrepanz umfassen.

Es versteht sich, dass auch die erste Austauschvorrichtung 202 über ein Tokenmodul verfügen kann, um beispielsweise die erhaltenen Tokens darin zu speichern. Die Tokenmenge kann sich entsprechend erhöhen. Es versteht sich ferner, dass die Peer-to-Peer-Anwendung 224 Tokenmodule, beispielsweise jeweils verschiedenen Nutzern zugeordnet, umfassen und insbesondere überwachen kann. Schließlich versteht es sich, dass auch die zweite Austauschvorrichtung über ein Energiemessmodul und/oder Tokenmessmodul verfügen kann.

Es sei angemerkt, dass die vorherigen Ausführungen in einfacher Weise auf andere Systeme bzw. Austauschvorrichtungen übertragen werden können.

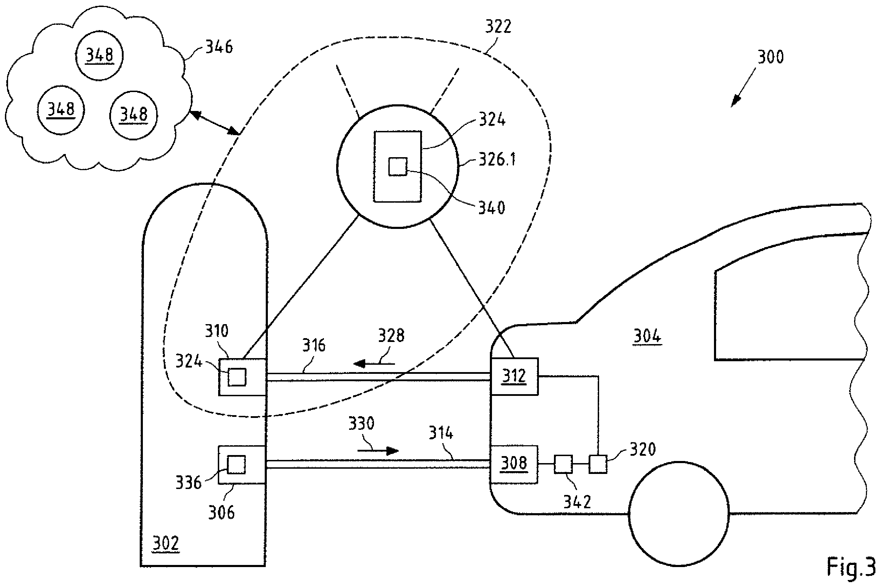

Die Figur 3 zeigt eine schematische Ansicht eines weiteren Ausführungsbeispiels eines Systems 300 zum Austauschen von elektrischer Energie. Das System 300 ist vorliegend ein Ladesystem 300 zum Laden von Fahrzeugen 304, kann aber in einfacher Weise auf andere Austauschsysteme übertragen werden. Zur Vermeidung von Wiederholungen werden nachfolgend im Wesentlichen nur die Unterschiede zu den Ausführungsbeispielen nach Figur 1 und 2 beschrieben. Für die anderen Komponenten des Systems 300 wird insbesondere auf die obigen Ausführungen verwiesen.

Zunächst ist im vorliegenden Ausführungsbeispiel - im Vergleich zu den vorherigen Ausführungsbeispielen - das erste Peer-to-Peer-Modul 310 ein Peer bzw. Knoten des Peer-to-Peer-Netzwerks 322. Ferner umfasst vorliegend (nur) die zweite Austauschvorrichtung 304 in Form eines Fahrzeugs 304 das mindestens eine Synchronisationsmodul 320. Das Synchronisationsmodul 320 (z.B. Smart Contrat oder ein Embedded Controller oder ein zentrales System) ist insbesondere mit einer Energiemesseinrichtung 342 verbunden.

Die Energiemesseinrichtung 342 ist eingerichtet, zumindest während des Austauschvorgangs die empfangene elektrische Energie zu messen. Die Messdaten werden dem Synchronisationsmodul 320 zur Verfügung gestellt. Basierend auf dem empfangenen Energiestrom 330 passt das Synchronisationsmodul 320 im vorliegenden Ausführungsbeispiel den abgegebenen Tokenstrom 328 an. Das Synchronisationsmodul 320 ist insbesondere zum Synchronisieren des Energiestroms mit dem Tokenstrom 328 derart eingerichtet ist, dass bei Detektion einer Änderung des Energiestroms 330 eine Änderung des Tokenstroms 328 bewirkt wird.

Beispielsweise kann in einer Startphase des Austauschvorgangs vorgesehen sein, dass der Energiestrom 330 bis auf einen maximalen Energiestrom (der z.B. vorab vereinbart werden kann) erhöht wird. Die Synchronisation kann insbesondere die entsprechende Erhöhung des Tokenstroms bis zu dem korrespondierenden maximalen Tokenstrom (der z.B. vorab vereinbart werden kann) umfassen. Alternativ kann in der Startphase des Austauschvorgangs zunächst der Tokenstrom erhöht und die Synchronisation eine entsprechende Erhöhung des Energiestroms umfassen. Entsprechendes kann auch in den zuvor beschriebenen Ausführungsbeispielen vorgesehen sein.

Wie ferner aus der Figur 3 zu erkennen ist, umfasst die Peer-to-Peer-Anwendung 324 vorliegend ein Überwachungsmodul 340, eingerichtet zum Überwachen des Synchronisationsmoduls 320 und/oder des Austauschvorgangs. Mindestens ein Teil der Peers 326.1, 310 des Peer-to-Peer-Netzwerkes 322 kann zum Ausführen des Überwachungsmoduls 340 eingerichtet sein. Insbesondere können Messdaten von den Peer-to-Peer-Modulen 310, 312 an die Peer-to-Peer-Anwendung 324 übertragen und von dem Überwachungsmodul 340 (z.B. ein von einer Mehrzahl an Peers ausführbares Softwaremodul) ausgewertet werden. Beispielsweise können die Messdaten mit in einem Austauschvorgangsvereinbarungsmodul vorab gespeicherten Datenelementen verglichen werden, wie nachfolgend näher ausgeführt werden wird.

Darüber hinaus weist das System 300 vorliegend mindestens eine von der Peer-to-Peer-Anwendung gesteuerte Speicheranordnung 346 auf. Daten können in der Peer-to-Peer-Anwendung 324 und/oder in der Speicheranordnung 346 (lesbar) gespeichert werden, die durch die Peer-to-Peer-Anwendung 324 gesteuert wird. Vorzugsweise kann die Speicheranordnung 346, die eine Vielzahl von dezentralen Speichereinheiten 348 umfasst, ein dezentrales Datenbanksystem (wie z. B. IPFS) oder ein dezentraler Objektspeicher (wie z.B. storj) oder eine dezentrale verteilte Datenbank (wie BigchainDB) sein, das/der/die von der Peer-to-Peer-Anwendung 332 gesteuert wird. Beispielsweise können Details über alle registrierten Vorrichtungen in der Speicheranordnung 346 gespeichert sein.

Auch können Tokens in Wallets in einer Blockchain-Datenbank (z.B. BigchainDB) genutzt oder diese Token von einer anderen Blockchain in diese Wallets mit kryptographischen Verfahren transferiert werden. Austauschvorrichtungen können ein Wallet in dieser Datenbank haben. Tokenstreams können dann als Transaktionen in dieser Datenbank durchgeführt werden.

Zudem kann das Synchronisationsmodul über sogenannte Kryptokonditionen (crypto conditions) in der Blockchain-Datenbank abgebildet sein. Dazu können die IoT Daten der Messmodule (durch Nutzung des Peer-to-Peer Netzwerks sicher in Hinblick auf Datenintegrität und -authentizität) an die Datenbank übertragen und gespeichert werden. Die Kryptokonditionen verarbeiten die IoT Daten aus den Energie-Messmodulen und steuern den Tokenstrom. Sind Token verbraucht, kommt der Tokenstrom zum Erliegen.

Weiterhin kann gemäß anderen Varianten der vorliegenden Anmeldung mindestens eine (nicht gezeigte) Off-Chain-Rechenvorrichtung vorgesehen sein, die durch die Peer-to-Peer-Anwendung 324 gesteuert werden kann. Eine Off -Chain-Rechenvorrichtung kann Algorithmen, kognitive Analytik, maschinelles Lernen und/oder künstliche Intelligenz (KI) bereitstellen, um beispielsweise den Austauschvorgang, insbesondere den Ladevorgang, zu optimieren.

In einer (nicht gezeigten) Ausführung kann ein Synchronisationsmodul mit einer (nicht gezeigten) Steuervorrichtung eines Verbrauchers, Anbieters und/oder Netzbetreibers verbunden sein. In dieser Ausführung kann die Steuervorrichtung bspw. nicht den Energiestrom steuern, sondern (ggf. über das Synchronisationsmodul) einen Tokenstrom, der dann wiederum den Energiestrom steuert.

Auch können als (dynamische) Synchronisationskriterien Preissignale an ein Synchronisationsmodul gesendet werden. Bei sich ändernden Preisen kann z.B. bei gleichleibendem Tokenstrom der Energiestrom angepasst werden. Der Vorteil ist, dass ein dynamisches "Pricing" direkt in sich ändernde Energieströme umgesetzt werden kann. Ein Synchronisationsmodul kann hierfür beispielsweise ein Preis zu Token- bzw. Energiestromumrechnungsmodul aufweisen.

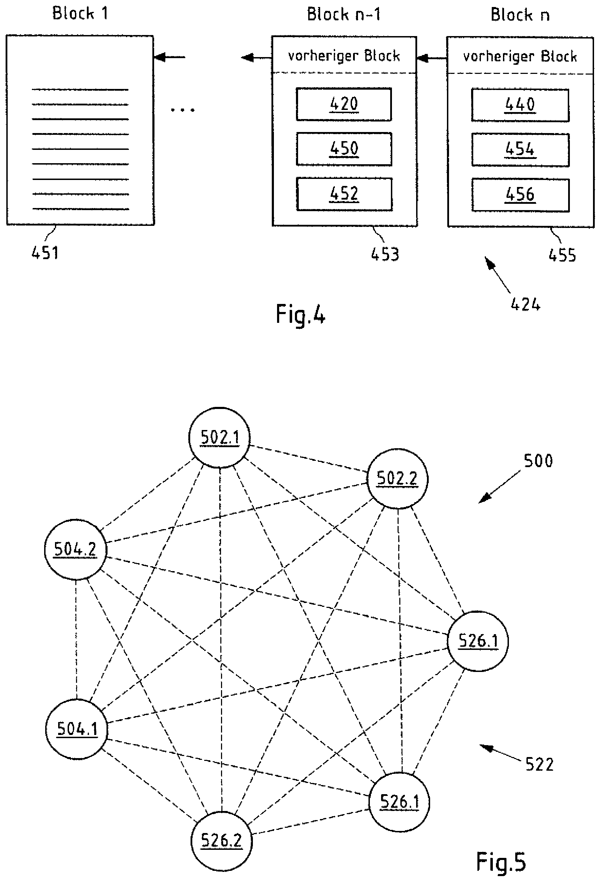

Figur 4 zeigt eine schematische Ansicht eines Ausführungsbeispiels einer Peer-to-Peer-Anwendung 424 gemäß der vorliegenden Anmeldung. Die Peer-to-Peer-Anwendung 424 ist insbesondere ein für die Teilnehmer eines Peer-to-Peer-Netzwerks einsehbares bzw. lesbares Register, in welches Nachrichten von Vorrichtungen bzw. Teilnehmern des Peer-to-Peer-Netzwerks geschrieben und/oder aus dem Nachrichten ausgelesen werden können. Bei einem bevorzugten Ausführungsbeispiel kann die Peer-to-Peer-Anwendung 424 eine Blockchain 424 sein.

Nachfolgend wird bei der näheren Beschreibung des vorliegenden Ausführungsbeispiels davon ausgegangen, dass es sich bei der Peer-to-Peer-Anwendung 424 um eine Blockchain 424 handelt. Jedoch lassen sich die nachfolgenden Ausführungen problemlos auf andere Peer-to-Peer-Anwendungen übertragen.

Die Blockchain 424 wird aus mindestens einem Block 451 bis 455, vorzugsweise einer Vielzahl von miteinander verknüpften Blöcken 451 bis 455, gebildet. Der erste Block 451 kann auch Genesis-Block 451 genannt werden. Wie zu erkennen ist, bezieht sich ein Block 453, 455 (außer dem ersten Block 451) auf den jeweils vorherigen Block 451, 453. Ein neuer Block kann durch einen rechenintensiven Prozess (zum Beispiel so genanntes "Mining" oder durch einen entsprechenden Prozess) erschaffen werden und insbesondere allen Teilnehmern des Peer-to-Peer-Netzwerks bereitgestellt werden.

Die vorliegende Blockchain 424 ist insbesondere dazu eingerichtet Nachrichten von einem Peer-to-Peer Modul eines Teilnehmers des Peer-to-Peer-Netzwerks, wie einem ersten Peer-to-Peer-Modul einer Austauschvorrichtung, zu empfangen und diese Nachricht in der Blockchain 424 zu speichern. Insbesondere kann eine neue Nachricht in dem aktuellen Block 455 der Blockchain 424 gespeichert und veröffentlicht werden. Aufgrund der Ausgestaltung einer Blockchain 424 als öffentliches Register 424, kann die Nachricht eines Peer-to-Peer Moduls von bevorzugt sämtlichen Teilnehmern des Peer-to-Peer-Netzwerks gelesen und somit insbesondere überprüft werden.

In der vorliegenden Blockchain 424 können unterschiedliche Arten von Nachrichten, beispielsweise innerhalb eines Smart Contracts (Algorithmus und/oder Speicher auf der Blockchain) (und/oder außerhalb der Blockchain 424), verarbeitet und/oder gespeichert werden. Wie bereits beschrieben wurde, kann die Blockchain 424 zur Generierung eines Austauschvorgangsvereinbarungsmoduls 454 eingerichtet sein. Nachfolgend wird beispielhaft die Generierung und die Ausgestaltung eines Austauschvorgangsvereinbarungsmoduls 454 dargestellt.

Beispielsweise kann vor dem Austauschvorgang, wie ein Ladevorgang, ein zweites Peer-to-Peer-Modul, das einem zu ladenden Fahrzeug bzw. dessen Nutzer (bzw. dessen Identität und Wallet) zugeordnet ist, die Generierung eines Austauschvorgangsvereinbarungsmoduls initiieren. Basierend auf den in dem Austauschvorgangsvereinbarungsmodul generierten und gespeicherten Datenelementen kann anschließend der Austauschvorgang durchgeführt werden. Die Generierung kann insbesondere durch Senden einer Anfragenachricht 450 an die Peer-to-Peer-Anwendung 424 initiiert werden.

Eine Anfragenachricht 450 kann beispielsweise folgende Datenelemente umfassen:

| | |
|---|---|
| Kennung/en: | mindestens eine Kennung der anfragenden zweiten Austauschvorrichtung und/oder mindestens eine Kennung einer (gewünschten) ersten Austauschvorrichtung (z.B. bestimmte Ladestation), |
| Synchronisationskriterium: | Kriterium (z.B. Verhältnis oder Verhältnisbereich zwischen Token- und Energiestrom, primäres Synchronisationsmodul im Fall von zwei Synchronisationsmodulen, zu verwendende Protokolle, etc.), welches während des Austauschvorgangs bei der Durchführung der Synchronisation einzuhalten ist |
| Austauschvorgangsstartkriterium: | Startkriterium des Austauschvorgangs |
| Austauschkriterium: | Kriterium, welches während oder nach dem Austauschvorgang erfüllt oder eingehalten werden muss. |

Es versteht sich, dass eine Anfragenachricht 450 weniger Datenelemente und mehr Datenelemente aufweisen kann. Neben einer Kennung einer gewünschten ersten Austauschvorrichtung können beispielsweise auch geographische Koordinaten angegeben werden, in denen sich eine erste Austauschvorrichtung befinden soll.

Als Austauschvorgangsstartkriterium kann beispielsweise angegeben sein, dass zunächst ein Energiestrom oder zunächst ein Tokenstrom gestartet werden muss. Anschließend kann dann der noch zu initiierende Strom entsprechend dem Synchronisationskriterium mit dem zuvor gestarteten Strom synchronisiert werden. Zudem kann eine Startzeit oder ein Startzeitbereich angegeben werden. Ebenfalls kann als Austauschvorgangsstartkriterium der Startwert einer Tokenmenge pro Zeiteinheit und/oder den Startwert einer Energiemenge pro Zeiteinheit angegeben sein.

Ferner kann/können mindestens ein Austauschkriterium, vorzugsweise mehrere Austauschkriterien, angegeben sein. Beispielsweise kann als Austauschkriterium eine Mengenangabe, wie die Energiemenge, die von der zweiten Austauschvorrichtung gewünscht ist, angegeben sein. Auch kann die Anfragenachricht 450 eine Zeitangabe über z.B. den zukünftigen Zeitraum, in dem die Energieübertragung erfolgen soll, umfassen. Ferner kann als Austauschkriterium ein Transaktionskriterium angegeben sein. Hierbei kann es sich um ein Kriterium handeln, welches von der zweiten Austauschvorrichtung erfüllt werden wird, um ein Austauschvorgangsvereinbarungsmodul zu generieren. Mit anderen Worten kann das Transaktionskriterium die Tokenmenge (die einem bestimmten Geldwert entsprechen kann) angeben, die die zweite Austauschvorrichtung für die gewünschte Energiemenge entrichten möchte.

Es versteht sich, dass anderen Austauschkriterien festgelegt sein können. Weitere Angaben können beispielsweise ein Zeitstempel, eine Signatur des Absenders der Nachricht, eine Kennung der Nachricht und weitere Transaktionskriterien, wie eine Angabe über die gewünschte Erzeugungs- oder Verbrauchsart, Entfernung zur Austauschvorrichtung, etc., sein.

Eine weitere Nachricht 452 kann eine Annahmenachricht 452 sein. Die Annahmenachricht 452 kann in diesem Ausführungsbeispiel von dem ersten Peer-to-Peer-Modul der ersten Austauschvorrichtung generiert und insbesondere an die Peer-to-Peer-Anmeldung 424 übertragen werden. Dies kann insbesondere nach einem Lesen der Anfragenachricht 450 erfolgen.

Eine Annahmenachricht 452 kann gleiche oder zumindest ähnliche Datenelemente wie eine zugehörige Anfragenachricht 450 aufweisen. Zusätzlich kann die Annahmenachricht 452 beispielsweise eine Bezugsangabe auf eine vorherige Anfrage, wie die Kennung der Anfragenachricht 450, umfassen. Beispielsweise kann in Bezug auf eine Anfragenachricht 450 in einer Annahmenachricht 452 aufgelistet sein, dass eine bestimmte und gewünschte Energiemenge für den zukünftigen Zeitraum zu dem angebotenen Transaktionskriterium geliefert werden kann. Ebenfalls kann die Kennung der ersten Austauschvorrichtung und ein Synchronisationskriterium angegeben sein.

Auch können Anfragenachrichten und/oder Annahmenachrichten direkt zwischen den Austauschvorrichtungen ausgetauscht werden. Vorzugsweise über ein Peer-to-Peer-Kommunikationsprotokoll.

Bei der Energiemenge kann es sich um eine Teilmenge der angefragten Menge handeln. Bei der Zeitangabe kann es sich um eine Teilzeitangabe handeln. Ebenso kann ein geringeres/höheres Transaktionskriterium angegeben sein. Falls eine Annahmenachricht 452 nur eine Teilmenge der angefragten Energiemenge und/oder Tokenmenge, Teilzeitangabe und/oder ein geringeres/höheres/anderes Transaktionskriterium oder dergleichen umfasst, kann die Annahmenachricht 452 als Gegenangebotsnachricht bezeichnet werden. Diese kann von der zweiten Austauschvorrichtung durch eine weitere Annahmenachricht angenommen werden. Basierend hierauf kann mindestens ein Peer-to-Peer-Modul die Generierung eines Austauschvorgangsvereinbarungsmoduls durch die Peer-to-Peer-Anwendung veranlassen.

Insbesondere kann es mehrere Anfragenachrichten und/oder Annahmenachrichten geben. Jede Austauschvorrichtung kann Vorgaben geben, nach denen mindestens ein Austauschvorgangsvereinbarungsmodul generiert werden kann. In einem vorzugsweise automatischen, beispielsweise iterativen, Prozess kann vorzugsweise jeder Anfragenachricht eine möglichst optimal korrespondierende Annahmenachricht zugeordnet werden. Die Blockchain 424 kann ferner eingerichtet sein, basierend auf den Nachrichten und unter Bewirkung der Austauschvorrichtungen ein Austauschvorgangsvereinbarungsmodul 454 zu generieren.

Es versteht sich, dass die Generierung eines Austauschvorgangsvereinbarungsmoduls 454 auch von einem ersten Peer-to-Peer-Modul initiiert werden kann.

Eine Austauschvorgangsvereinbarungsmodul 454 kann innerhalb eines Smart Contracts 454 in einem Block 455 gespeichert sein. Ein Smart-Contract kann Computerprogrammcode (kurz Code) umfassen. In dem Austauschvorgangsvereinbarungsmodul 454 kann insbesondere der Austausch einer bestimmten Energiemenge und einer bestimmten Tokenmenge, die einem bestimmten Preis entsprechen kann, zwischen den zumindest zwei Austauschvorrichtungen vereinbart sein.

Darüber hinaus kann die Blockchain 424 ein Synchronisationsmodul 420 umfassen. Das Synchronisationsmodul 420 ist eingerichtet, während eines Austauschvorgangs den Energiestrom und den Tokenstrom insbesondere basierend auf den in einem Austauschvorgangsvereinbarungsmodul 454 gespeicherten Datenelementen (Synchronisationskriterium, Austauschvorgangsstartkriterium) miteinander zu synchronisieren.

Ein Überwachungsmodul 440 kann eingerichtet sein, den Synchronisationsprozess zu überwachen. Beispielsweise kann das Überwachungsmodul 440 aus bereitgestellten Tokenmessdaten und bereitgestellten Energiemessdaten und dem auslesbaren Austauschvorgangsvereinbarungsmodul 454 ableiten, ob die in dem Austauschvorgangsvereinbarungsmodul 454 gespeicherten Kriterien eingehalten werden. Eine Manipulation kann hierdurch signifikant erschwert werden.

Darüber hinaus kann in der Peer-to-Peer-Anwendung 424 ein Austauschvorgangsdatensatz 456 gespeichert werden. Ein Austauschvorgangsdatensatz 456 kann insbesondere folgende Datenelemente umfassen:

| | |
|---|---|
| Kennung/en: | mindestens eine Kennung mindestens einer an dem Austauschvorgang beteiligten Austauschvorrichtung und/oder Kennung eines zugehörigen Austauschvorgangsvereinbarungsmoduls 454, |
| Energiemenge: | ausgetauschte elektrische Energiemenge |
| Tokenmenge: | ausgetauschte Tokenmenge |

Beispielsweise können die entsprechenden Datenelemente von den jeweiligen Peer-to-Peer-Modulen nach dem entsprechenden Austauschvorgang an die Peer-to-Peer-Anwendung 424 übertragen und als Austauschvorgangsdatensatz 456 gespeichert werden. Alternativ oder zusätzlich kann als Datenelement beispielsweise der Umrechnungspreis (Umrechnung von Energiemengen zu Tokenmengen, diskrete Einheiten (diskrete Größe kleinster Energie- oder Tokenstrompakete), etc.) gespeichert werden.

Das Überwachungsmodul 440 kann dann beispielsweise basierend auf dem Austauschvorgangsdatensatz 456 und dem zugehörigen Austauschvorgangsvereinbarungsmodul 454 den Austauschvorgang überprüfen. Wenn Diskrepanzen festgestellt werden, kann dies in der Peer-to-Peer-Anwendung 424 veröffentlicht werden. Ggf. können weitere Maßnahmen, wie eine nachträgliche Korrektur oder dergleichen eingeleitet werden.

Vorzugsweise kann der Austauschvorgangsdatensatz 456 ein während des Austauschvorgangs (insbesondere in Echtzeit) aktualisierbarer Austauschvorgangsdatensatz 456 sein. In diesem Fall kann der Austauschvorgang insbesondere von dem Überwachungsmodul 440 bereits während des Austauschvorgangs ausgewertet werden. Eine Überwachung des Austauschvorgang nahezu in Echtzeit ist möglich. Bei Detektion einer Diskrepanz oder Manipulation zwischen den Datenelementen des aktualisierbaren Austauschvorgangsdatensatzes 456 und des vorab generierten Austauschvorgangsvereinbarungsmodul 454 können entsprechende Maßnahmen (z.B. Korrigieren, Abbrechen, etc.) bereits während des Austauschvorgangs veranlasst werden.

Wie bereits beschrieben wurde, kann das Synchronisationsmodul alternativ oder zusätzlich in mindestens einer Austauschvorrichtung und/oder einer separaten Einrichtung integriert sein.

Insbesondere ist die Peer-to-Peer-Anwendung 424 dazu eingerichtet, die gespeicherten Daten/Nachrichten in manipulationssicherer Weise zu speichern. Dies erfolgt im Wesentlichen dadurch, dass durch das gesamte Peer-to-Peer-Netzwerk zum Beispiel ein Austauschvorgangsvereinbarungsmodul 454 durch die kumulierte Rechenleistung des gesamten Peer-to-Peer-Netzwerks verifiziert werden kann.

Vorzugsweise können zumindest die zuvor beschriebenen Nachrichten/Daten, wie das Austauschvorgangsvereinbarungsmodul oder der Austauschvorgangsdatensatz 456, in einem Block 453, 455 der Blockchain 424 durch einen Merkle-Baum paarweise miteinander gehasht werden. Insbesondere kann nur der letzte Hashwert, der so genannte Root-Hash, als Prüfsumme in dem Header eines Blocks vermerkt werden. Dann kann der Block mit dem vorherigen Block verkettet werden. Das Verketten der Blöcke kann mithilfe dieses Root-Hashes durchgeführt werden. Jeder Block kann im Header den Hash des gesamten vorherigen Blockheaders umfassen. Dies erlaubt es, die Reihenfolge der Blöcke eindeutig festzulegen. Außerdem kann dadurch auch das nachträgliche Modifizieren vorangegangener Blöcke bzw. der in den vorherigen Blöcken gespeicherten Nachrichten (praktisch) ausgeschlossen werden, da insbesondere die Hashes aller nachfolgenden Blöcke in kurzer Zeit ebenfalls neu berechnet werden müssten.

Es versteht sich, dass die zuvor genannten Module/Datensätze etc. zumindest teilweise auch miteinander kombiniert werden können. Beispielsweise kann der Austauschvorgangsdatensatz in einem Austauschvorgangsvereinbarungsmodul gespeichert werden. Auch versteht es sich, dass zumindest teilweise die Daten in einer zuvor beschriebenen Speicheranordnung gespeichert werden können.

Wie oben bereits beschrieben wurde, kann die Peer-to-Peer-Anwendung auch ein (nicht gezeigtes) Synchronisationsmodul- und Steuerungs-Register umfassen. Auch kann anstelle einer linearen Blockchain ein DAG tangle oder eine Blockchain Datenbank oder ein Lightning oder State Channel Netzwerk oder eine Blockchain Integrationstechnologie, wie Interledger Protocol oder eine Kombination der genannten Peer-to-Peer Technologien, zum Einsatz kommen.

Figur 5 zeigt eine schematische Ansicht eines weiteren Ausführungsbeispiels eines Systems 500 gemäß der vorliegenden Anmeldung. Zur Vermeidung von Wiederholungen werden nachfolgend im Wesentlichen nur die Unterschiede zu den Ausführungsbeispielen nach Figur 1, 2 und 3 beschrieben.

Das stark vereinfacht dargestellte System 500 umfasst vorliegend sieben Entitäten 502.1, 502.2, 504.1, 504.2, 526.1, 526.2, die insbesondere Peers eines Peer-to-Peer-Netzwerkes 522 umfassen und/oder diese bilden. Jeder Peer kann eine (nicht dargestellte) Peer-to-Peer-Anwendung, z.B. die Blockchain 424 gemäß Figur 4, bereitstellen bzw. umfassen.

Vorliegend sind zwei erste Austauschvorrichtungen 502.1, 502.2, beispielsweise Ladestationen, und zwei zweite Austauschvorrichtungen 504.1, 504.2, beispielsweise Elektrofahrzeuge, vorgesehen. Ferner können eine Mehrzahl von Peers 526.1, 526.2 in Form von anderen Recheneinrichtungen 526.1, 526.2 gebildet sein.

Vorliegend sind insbesondere zwei unterschiedliche Arten von Peers bzw. Knotenrechnern 502.1, 504.1, 526.1 bzw. 502.2, 504.2, 526.2 dargestellt. Sämtliche Peers 502.1 bis 526.2 sind von dem Peer-to-Peer-Netzwerk 522 umfasst. Beim vorliegenden Ausführungsbeispiel überprüft jedoch nur ein Teil der Peers 502.1 bis 526.2, vorliegend die Peers 502.1, 504.1, 526.1, die Validität der in der Peer-to-Peer-Anwendung gespeicherten Nachrichten/Daten/Module. Insbesondere ist nur ein Teil der Peers 502.1, 504.1, 526.1 eingerichtet, beispielhafte Module, wie ein Überwachungsmodul oder ein Synchronisationsmodul, auszuführen.

Auch kann vorgesehen sein, dass nur ein Teil der Peers die gesamte Peer-to-Peer-Anwendung speichert und/oder nur ein Teil der Peers die Algorithmen der Smart Contracts ausführt. Da mit der Validierung/Überprüfung ein erheblicher Rechenaufwand einhergehen kann, kann es aus Effizienzgründen von Vorteil sein, wenn nur ein Teil der Peers 502.1, 504.1,526.1, insbesondere besonders leistungsstarke Peers 502.1, 504.1, 526.1, die Validierung vornehmen. Leistungsstark meint insbesondere eine hohe Rechenleistung. Mit anderen Worten wird vorliegend von einem validen Eintrag in die Peer-to-Peer-Anwendung, wie einer Blockchain, ausgegangen, wenn (nur) ein Teil der Peers 502.1, 504.1, 526.1 zu einem positiven Ergebnis eines Überprüfungsvorgangs gelangt ist. Es versteht sich, dass auch nur ein einzelner, insbesondere besonders leistungsstarker Peer, die Validierung durchführen kann.

Ebenso kann bei einer alternativen (nicht gezeigten) Ausführungsform vorgesehen sein, dass ein insbesondere großes Peer-to-Peer-Netzwerk in zwei oder mehr Cluster aufgeteilt sein kann. Bei einem entsprechenden Peer-to-Peer-Netzwerk kann beispielsweise eine Validierung nur von den Mitgliedern eines Clusters durchgeführt werden.

Weiterhin kann bei einer (nicht gezeigten) Ausführungsform vorgesehen sein, dass eine Steuervorrichtung des Anbieters, Nutzers oder des Netzbetreibers oder zentrale Steuerungssysteme für Austauschmodulinfrastrukturen mit dem Peer-to-Peer Netzwerk verbunden sind.

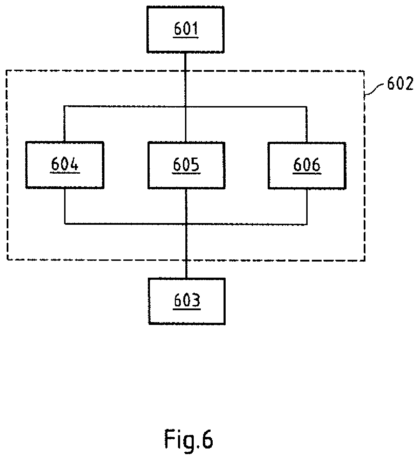

Die Figur 6 zeigt ein Diagramm eines Ausführungsbeispiels eines Verfahrens gemäß der vorliegenden Anmeldung. In einem ersten Schritt 601 kann, beispielsweise entsprechend den vorherigen Ausführungen (siehe z.B. Figur 4), ein Austauschvorgangsvereinbarungsmodul generiert werden. Insbesondere können in dem Austauschvorgangsvereinbarungsmodul Details zu einem durchzuführenden Austauschvorgang zwischen einer ersten Austauschvorrichtung und einer zweiten Austauschvorrichtung gespeichert werden.

In einem nächsten Schritt 602 kann der Austauschvorgang durchgeführt werden. Dieser kann eine Mehrzahl von im Wesentlichen parallel zueinander durchgeführten Teilschritten umfassen. Während Schritt 604 kann ein Energiestrom von einer ersten Austauschvorrichtung über eine elektrische Verbindung an eine zweite Austauschvorrichtung, insbesondere entsprechend dem generierten Austauschvorgangsvereinbarungsmodul, abgegeben werden. Mit anderen Worten kann in Schritt 604 die zweite Austauschvorrichtung einen Energiestrom von der ersten Austauschvorrichtung empfangen.

Parallel hierzu kann von einer zweiten Austauschvorrichtung die Übertragung eines Tokenstroms an die erste Austauschvorrichtung bewirkt werden (Schritt 605), wie zuvor beschrieben wurde. Mit anderen Worten kann in Schritt 605 ein Tokenstrom von einem ersten Peer-to-Peer-Modul empfangen werden.

In Schritt 606 kann der Energiestrom mit dem Tokenstrom synchronisiert werden, indem bei Detektion einer Änderung des Tokenstroms eine (entsprechende) Änderung des Energiestroms bewirkt wird, oder indem bei Detektion einer Änderung des Energiestroms eine Änderung des Tokenstroms bewirkt wird, wie zuvor beschrieben wurde.

In Schritt 603 kann vorliegend nach dem Austauschvorgang ein Austauschvorgangsdatensatz in der Peer-to-Peer-Anwendung gespeichert werden. Insbesondere können die entsprechenden Messdaten an die Peer-to-Peer-Anwendung übertragen werden.

Wie bereits beschrieben wurde, kann der Schritt 603 ein Teilschritt von Schritt 602 sein. Zudem kann der Austauschvorgang und/oder das Synchronisationsmodul bzw. der Synchronisationsprozess in mindestens einem (nicht dargestellten) Überprüfungsschritt überprüft werden.

## Patentansprüche

1. System (100, 200, 300, 500) zum Austauschen von elektrischer Energie, umfassend:
- mindestens eine erste Austauschvorrichtung (102, 202, 302, 502.1, 502.2), zumindest eingerichtet zum Abgeben von elektrischer Energie in Form eines Energiestroms (130, 230, 330) an mindestens eine zweite, mit der ersten Austauschvorrichtung (102, 202, 302, 502.1, 502.2) verbindbare, Austauschvorrichtung (104, 204, 304, 504.1, 504.2) während eines Austauschvorgangs,
- mindestens ein erstes, der ersten Austauschvorrichtung (102, 202, 302, 502.1, 502.2) zugeordnetes, Peer-to-Peer-Modul (110, 210, 310), eingerichtet zum Kommunizieren mit mindestens einer Peer-to-Peer-Anwendung (124, 224, 324, 424) mindestens eines Peers eines Peer-to-Peer-Netzwerks (122, 222, 322, 522),
- wobei das erste Peer-to-Peer-Modul (110, 210, 310) zumindest zum Empfangen eines Tokenstroms (128, 228, 328) während des Austauschvorgangs eingerichtet ist, wobei die Aussendung des Tokenstroms (128, 228, 328) von der zweiten Austauschvorrichtung (104, 204, 304, 504.1, 504.2) bewirkbar ist, und
- mindestens ein Synchronisationsmodul (120, 220, 320, 420), eingerichtet zum Synchronisieren des von der ersten Austauschvorrichtung (102, 202, 302, 502.1, 502.2) an die zweite Austauschvorrichtung (104, 204, 304, 504.1, 504.2) abgegebenen Energiestroms (130, 230, 330) mit dem empfangenen Tokenstrom (128, 228, 328) während des Austauschvorgangs, wobei das Synchronisieren ein Bewirken eines im Wesentlichen zeitlichen Gleichlaufs zwischen dem abgegebenen Energiestrom (130, 230, 330) und dem empfangenen Tokenstrom (128, 228, 328) während des Austauschvorgangs umfasst,
- wobei die mindestens eine Peer-to-Peer-Anwendung (124, 224, 324, 424) zum Speichern von mindestens einem Austauschvorgangsdatensatz (456), umfassend eine ausgetauschte Energiemenge im abgegebenen Energiestrom und/oder eine ausgetauschte Tokenmenge im empfangenen Tokenstrom, wobei die ausgetauschte Energiemenge und/oder die ausgetauschte Tokenmenge nahezu kontinuierlich aktualisiert werden, über den mindestens einen Austauschvorgang eingerichtet ist, derart, dass der Austauschvorgangsdatensatz (456) von mindestens einem Teil der Peers (126, 226, 326, 310) des Peer-to-Peer-Netzwerkes (122, 222, 322, 522) lesbar ist, wobei die bereits ausgetauschte Tokenmenge und/oder ausgetauschte Energiemenge durch den Teil der Peers während des Austauschvorgangs überprüft wird, indem ein Vergleichen eines zuvor generierten Austauschvorgangsvereinbarungsmoduls mit dem kontinuierlich aktualisierten Austauschvorgangsdatensatz erfolgt, wobei bei Detektion einer Abweichung der Austauschvorgang abgebrochen oder unterbrochen wird.

2. System (100, 200, 300, 500) nach Anspruch 1, wobei
- das System (100, 200, 300, 500) mindestens ein zweites, der zweiten Austauschvorrichtung (104, 204, 304, 504.1, 504.2) zugeordnetes, Peer-to-Peer-Modul (112, 212, 312) umfasst, eingerichtet zum Kommunizieren mit der Peer-to-Peer-Anwendung (124, 224, 324, 424) des Peer-to-Peer-Netzwerks (122, 222, 322, 522),
- wobei das zweite Peer-to-Peer Modul (112, 212, 312) zumindest zum Aussenden des Tokenstroms (128, 228, 328) an das erste Peer-to-Peer-Modul (110, 210, 310) eingerichtet ist.

3. System (100, 200, 300, 500) nach Anspruch 1 oder 2, wobei
- das System (100, 200, 300, 500) mindestens ein Energiemessmodul (236, 342) umfasst, eingerichtet zum Messen des Energiestroms (130, 230, 330), und/oder
- das System (100, 200, 300, 500) mindestens ein Tokenmessmodul (234) umfasst, eingerichtet zum Messen des Tokenstroms (128, 228, 328).

4. System (100, 200, 300, 500) nach einem der vorherigen Ansprüche, wobei
- das Synchronisationsmodul (120, 220, 320, 420) zum Synchronisieren des Energiestroms (130, 230, 330) mit dem Tokenstrom (128, 228, 328) derart eingerichtet ist, dass bei Detektion einer Änderung des Tokenstroms (128, 228, 328) eine Änderung des Energiestroms (130, 230, 330) bewirkt wird, und/oder
- das Synchronisationsmodul (120, 220, 320, 420) zum Synchronisieren des Energiestroms (130, 230, 330) mit dem Tokenstrom (128, 228, 328) derart eingerichtet ist, dass bei Detektion einer Änderung des Energiestroms (130, 230, 330) eine Änderung des Tokenstroms (128, 228, 328) bewirkt wird.

5. System (100, 200, 300, 500) nach einem der vorherigen Ansprüche, wobei das Synchronisationsmodul (120, 220, 320, 420) zum Synchronisieren des Energiestroms (130, 230, 330) mit dem Tokenstrom (128, 228, 328) abhängig von mindestens einem vorgegebenen Synchronisationskriterium eingerichtet ist.

6. System (100, 200, 300, 500) nach einem der vorherigen Ansprüche, wobei
- mindestens ein Peer-to-Peer-Modul (110, 112, 210, 212, 310, 312) zum Bewirken einer Generierung des Austauschvorgangsvereinbarungsmoduls (454) durch die Peer-to-Peer-Anwendung (124, 224, 324, 424) eingerichtet ist,
- wobei das Austauschvorgangsvereinbarungsmodul (454) von der Peer-to-Peer-Anwendung (124, 224, 324, 424) derart gespeichert wird, dass das Austauschvorgangsvereinbarungsmodul (454) von mindestens einem Teil der Peers (126, 226, 326, 310) des Peer-to-Peer-Netzwerkes (122, 222, 322, 522) lesbar ist, und
- wobei das Austauschvorgangsvereinbarungsmodul (454) insbesondere mindestens ein Datenelement aus den folgenden Datenelementen umfasst:
- mindestens eine Kennung mindestens einer an dem Austauschvorgang beteiligten Austauschvorrichtung (102, 104, 202, 204, 302, 304, 502.1, 502.2, 504.1, 504.2),
- mindestens ein Synchronisationskriterium,
- mindestens ein Austauschvorgangsstartkriterium,
- mindestens ein Austauschkriterium.

7. System (100, 200, 300, 500) nach einem der vorherigen Ansprüche wobei
- der Austauschvorgangsdatensatz (456) ferner mindestens mindestens eine Kennung mindestens einer an dem Austauschvorgang beteiligten Austauschvorrichtung (102, 104, 202, 204, 302, 304, 502.1, 502.2, 504.1, 504.2).

8. System (100, 200, 300, 500) nach einem der vorherigen Ansprüche wobei
- die Peer-to-Peer-Anwendung (124, 224, 324, 424) mindestens ein Überwachungsmodul (340, 440) umfasst, eingerichtet zum Überwachen des Synchronisationsmoduls (120, 220, 320, 420) und/oder des Austauschvorgangs, und
- mindestens ein Teil der Peers (126, 226, 326, 310) des Peer-to-Peer-Netzwerkes (122, 222, 322, 522) zum Ausführen des Überwachungsmoduls (340, 440) eingerichtet ist.

9. System (100, 200, 300, 500) nach einem der vorherigen Ansprüche, wobei
- die Peer-to-Peer-Anwendung (124, 224, 324, 424) ein dezentrales Register oder eine verteilte Datenbank ist, und
- die Peer-to-Peer-Anwendung (124, 224, 324, 424) insbesondere eine Blockchain oder eine dezentrale Ledger ist.

10. System (100, 200, 300, 500) nach einem der vorherigen Ansprüche, wobei der Tokenstrom eine bestimmte und nahezu kontinuierlich übertragbare Tokenmenge ist.

## Claims

1. A system (100, 200, 300, 500) for exchanging electrical energy, comprising:
- at least one first exchange device (102, 202, 302, 502.1, 502.2) at least configured to deliver electrical energy in the form of an energy stream (130, 230, 330) to at least one second exchange device (104, 204, 304, 504.1, 504.2) connectable to the first exchange device (102, 202, 302, 502.1, 502.2) during an exchange process,
- at least a first peer-to-peer module (110, 210, 310) associated with the first exchange device (102, 202, 302, 502.1, 502.2), arranged to communicate with at least one peer-to-peer application (124, 224, 324, 424) of at least one peer of a peer-to-peer network (122, 222, 322, 522),
- wherein the first peer-to-peer module (110, 210, 310) is configured to receive at least one token stream (128, 228, 328) during the exchange process, wherein the transmission of the token stream (128, 228, 328) is causable by the second exchange device (104, 204, 304, 504.1, 504.2), and
- at least one synchronization module (120, 220, 320, 420) configured to synchronize the token stream (128, 228, 328) delivered from the first exchange device (102, 202, 302, 502.1, 502.2) to the second exchange device (104, 204, 304, 504.1, 504. 2) with the received token stream (128, 228, 328) during the exchange process, wherein the synchronizing comprises causing the delivered energy stream (130, 230, 330) and the received token stream (128, 228, 328) to substantially synchronize in time during the exchange process,
- wherein the at least one peer-to-peer application (124, 224, 324, 424) is configured to store at least one exchange transaction data set (456), comprising an exchanged energy amount in the delivered energy stream and/or an exchanged token amount in the received token stream, about the at least one exchange transaction such that the exchange transaction data set (456) is readable by at least a portion of the peers (126, 226, 326, 310) of the peer-to-peer network (122, 222, 322, 522), wherein the exchanged energy amount and/or the exchanged token amount are essentially continuously updated, wherein the already exchanged token amount and/or exchanged energy amount is verified by the portion of the peers during the exchange process by comparing a previously generated exchange process agreement module with the continuously updated exchange transaction data set, wherein upon detection of a discrepancy the exchange process is aborted or interrupted.

2. The system (100, 200, 300, 500) of claim 1, wherein
- the system (100, 200, 300, 500) comprises at least one second peer-to-peer module (112, 212, 312) associated with the second exchange device (104, 204, 304, 504.1, 504.2) configured to communicate with the peer-to-peer application (124, 224, 324, 424) of the peer-to-peer network (122, 222, 322, 522),
- wherein the second peer-to-peer module (112, 212, 312) is configured to at least send the token stream (128, 228, 328) to the first peer-to-peer module (110, 210, 310).

3. The system (100, 200, 300, 500) according to claim 1 or 2, wherein
- the system (100, 200, 300, 500) comprises at least one energy measurement module (236, 342) configured to measure the energy stream (130, 230, 330), and/or
- the system (100, 200, 300, 500) comprises at least one token measurement module (234) configured to measure token current (128, 228, 328).

4. System (100, 200, 300, 500) according to any one of the preceding claims, wherein.
- the synchronization module (120, 220, 320, 420) is configured to synchronize the energy stream (130, 230, 330) with the token current (128, 228, 328) such that a change in the energy stream (130, 230, 330) is caused upon detection of a change in the token current (128, 228, 328),
and/or
- the synchronization module (120, 220, 320, 420) is configured to synchronize the energy stream (130, 230, 330) with the token current (128, 228, 328) such that a change in the token current (128, 228, 328) is caused upon detection of a change in the energy stream (130, 230, 330).

5. System (100, 200, 300, 500) according to any one of the preceding claims, wherein the synchronization module (120, 220, 320, 420) is configured to synchronize the energy stream (130, 230, 330) with the token current (128, 228, 328) depending on at least one predetermined synchronization criterion.

6. System (100, 200, 300, 500) according to any one of the preceding claims,
wherein
- at least one peer-to-peer module (110, 112, 210, 212, 310, 312) is configured to cause the generation of the exchange transaction agreement module (454) by the peer-to-peer application (124, 224, 324, 424),
- wherein the exchange transaction agreement module (454) is stored by the peer-to-peer application (124, 224, 324, 424) such that the exchange transaction agreement module (454) is readable by at least a portion of the peers (126, 226, 326, 310) of the peer-to-peer network (122, 222, 322, 522), and
- wherein the exchange transaction agreement module (454) comprises in particular at least one data element from the following data elements:
- at least one identifier of at least one exchange device (102, 104, 202, 204, 302, 304, 502.1, 502.2, 504.1, 504.2) involved in the exchange process,
- at least one synchronization criterion,
- at least one exchange process start criterion,
- at least one exchange criterion.

7. System (100, 200, 300, 500) according to any one of the preceding claims, wherein.
- the exchange transaction data set (456) further comprises at least one identifier of at least one exchange device (102, 104, 202, 204, 302, 304, 502.1, 502.2, 504.1, 504.2) involved in the exchange process.

8. System (100, 200, 300, 500) according to any one of the preceding claims, wherein.
- the peer-to-peer application (124, 224, 324, 424) comprises at least one monitoring module (340, 440) configured to monitor the synchronization module (120, 220, 320, 420) and/or the exchange process, and
- at least a portion of the peers (126, 226, 326, 310) of the peer-to-peer network (122, 222, 322, 522) is configured to execute the monitoring module (340, 440).

9. System (100, 200, 300, 500) according to any one of the preceding claims, wherein.
- the peer-to-peer application (124, 224, 324, 424) is a decentralized register or a distributed database, and
- the peer-to-peer application (124, 224, 324, 424) is in particular a blockchain or a decentralized ledger.

10. System (100, 200, 300, 500) according to any one of the preceding claims, wherein the token stream is a specific and nearly continuously transferable token amount.

## Revendications

1. Système (100, 200, 300, 500) pour l'échange d'énergie électrique, comprenant :
- au moins un premier dispositif d'échange (102, 202, 302, 502.1, 502.2), au moins configuré pour fournir de l'énergie électrique sous la forme d'un courant d'énergie (130, 230, 330) à au moins un deuxième dispositif d'échange (104, 204, 304, 504.1, 504.2) pouvant être connecté au premier dispositif d'échange (102, 202, 302, 502.1, 502.2) pendant une opération d'échange,
- au moins un premier module e pair-à-pair (110, 210, 310) associé au premier dispositif d'échange (102, 202, 302, 502.1, 502.2), configuré pour communiquer avec au moins une application de pair-à-pair (124, 224, 324, 424) d'au moins un pair d'un réseau pair-à-pair (122, 222, 322, 522),
- où le premier module pair-à-pair (110, 210, 310) est conçu pour recevoir au moins un flux de token (128, 228, 328) pendant la transaction d'échange, où l'émission du flux de token (128, 228, 328) est effectuable par le deuxième dispositif d'échange (104, 204, 304, 504.1, 504.2), et
- au moins un module de synchronisation (120, 220, 320, 420), configuré pour synchroniser le flux d'énergie délivré du premier dispositif d'échange (102, 202, 302, 502.1, 502.2) vers le deuxième dispositif d'échange (104, 204, 304, 504.1, 504. 2) avec le flux de token reçu (128, 228, 328) pendant l'opération d'échange, où la synchronisation comprend effectuer essentiellement un synchronisme temporel entre le flux d'énergie délivré (130, 230, 330) et le flux de token reçu (128, 228, 328) pendant l'opération d'échange,
- où ladite au moins une application pair-à-pair (124, 224, 324, 424) est configuré pour sauvegarder au moins un ensemble de données d'opération d'échange (456) comprenant une quantité d'énergie échangée dans le flux d'énergie délivré et/ou une quantité de token échangée dans le flux de token reçu, où ladite quantité d'énergie échangée et/ou ladite quantité de token échangée est mise à jour presque continuellement, concernant ladite au moins une opération d'échange, de telle sorte que ledit ensemble de données d'opération d'échange (456) est utilisé par au moins une partie des pairs (126, 226, 326, 310) du réseau pair-à-pair (122, 222, 322, 522), où la quantité de token déjà échangée et/ou la quantité d'énergie échangée est vérifiée par la partie des pairs pendant l'opération d'échange en effectuant une comparaison d'un module d'accord de transaction d'échange généré auparavant avec l'ensemble de données d'opération d'échange continuellement actualisé, où l'opération d'échange est annulée ou interrompue en cas de détection d'un écart.

2. Système (100, 200, 300, 500) selon la revendication 1, où
- le système (100, 200, 300, 500) comprend au moins un deuxième module pair-à-pair (112, 212, 312) associé au deuxième dispositif d'échange (104, 204, 304, 504.1, 504.2), configuré pour communiquer avec l'application pair à pair (124, 224, 324, 424) du réseau pair à pair (122, 222, 322, 522),
- où le deuxième module pair-à-pair (112, 212, 312) est configuré au moins pour émettre le flux de token (128, 228, 328) vers le premier module pair-à-pair (110, 210, 310).

3. Système (100, 200, 300, 500) selon la revendication 1 ou 2, où
- le système (100, 200, 300, 500) comprend au moins un module de mesure d'énergie (236, 342) configuré pour mesurer le flux d'énergie (130, 230, 330), et/ou
- le système (100, 200, 300, 500) comprend au moins un module de mesure de token (234) configuré pour mesurer le flux de token (128, 228, 328).

4. Système (100, 200, 300, 500) selon l'une des revendications précédentes, où
- le module de synchronisation (120, 220, 320, 420) pour synchroniser le flux d'énergie (130, 230, 330) avec le flux de jeton (128, 228, 328) est configuré de telle sorte qu'en cas de détection d'une variation du flux de token (128, 228, 328), une variation du courant d'énergie (130, 230, 330) est effectuée,
et/ou
- le module de synchronisation (120, 220, 320, 420) pour synchroniser le flux d'énergie (130, 230, 330) avec le flux de jeton (128, 228, 328) est configuré de telle sorte qu'en cas de détection d'une variation du flux d'énergie (130, 230, 330), une modification du flux de token (128, 228, 328) est effectuée.

5. Système (100, 200, 300, 500) selon l'une des revendications précédentes, où le module de synchronisation (120, 220, 320, 420) pour synchroniser le flux d'énergie (130, 230, 330) avec le flux de token (128, 228, 328) est configuré en fonction d'au moins un critère de synchronisation prédéterminé.

6. Système (100, 200, 300, 500) selon l'une des revendications précédentes, où
- au moins un module pair-à-pair (110, 112, 210, 212, 310, 312) est configuré pour effectuer la génération du module d'accord de transaction d'échange (454) par l'application pair-à-pair (124, 224, 324, 424),
- où le module d'accord de transaction d'échange (454) est stocké par l'application pair-à-pair (124, 224, 324, 424) de telle sorte que le module d'accord de transaction d'échange (454) est lisible par au moins une partie des pairs (126, 226, 326, 310) du réseau pair-à-pair (122, 222, 322, 522), et
- où le module d'accord de transaction d'échange (454) comprend en particulier au moins un élément de données parmi les éléments de données suivants :
- au moins un identifiant d'au moins un dispositif d'échange (102, 104, 202, 204, 302, 304, 502.1, 502.2, 504.1, 504.2) impliqué dans l'opération d'échange,
- au moins un critère de synchronisation,
- au moins un critère de début d'opération d'échange,
- au moins un critère d'échange.

7. Système (100, 200, 300, 500) selon l'une des revendications précédentes, où
- l'ensemble de données d'opération d'échange (456) comprend en outre au moins un identifiant d'au moins un dispositif d'échange (102, 104, 202, 204, 302, 304, 502.1, 502.2, 504.1, 504.2) impliqué dans l'opération d'échange.

8. Système (100, 200, 300, 500) selon l'une des revendications précédentes, où
- l'application pair-à-pair (124, 224, 324, 424) comprend au moins un module de surveillance (340, 440) configuré pour surveiller le module de synchronisation (120, 220, 320, 420) et/ou la transaction d'échange, et
- au moins une partie des pairs (126, 226, 326, 310) du réseau pair-à-pair (122, 222, 322, 522) est configuré pour exécuter le module de surveillance (340, 440).

9. Système (100, 200, 300, 500) selon l'une des revendications précédentes, où
- l'application pair-à-pair (124, 224, 324, 424) est un registre décentralisé ou une base de données distribuée, et
- l'application pair-à-pair (124, 224, 324, 424) est en particulier une chaîne de blocs ou un registre décentralisé.

10. Système (100, 200, 300, 500) selon l'une des revendications précédentes, où le flux de token est une quantité de token déterminée et transmissible de manière quasi continue.
